# EUROPÄISCHE PATENTSCHRIFT

(11) **EP 4 086 068 B1**
(45) Veröffentlichungstag und Bekanntmachung des Hinweises auf die Patenterteilung: **31.01.2024**
(21) Anmeldenummer: 22171815.8
(22) Anmeldetag: 05.05.2022
(51) Int. Cl.: B29C 70/38, B29D 99/00

(54) **LEGEVORRICHTUNG UND LEGEVERFAHREN FÜR BANDFÖRMIGES MATERIAL**
LAYING DEVICE AND LAYING METHOD FOR STRIP-SHAPED MATERIAL
DISPOSITIF DE POSE ET PROCÉDÉ DE POSE POUR MATIÈRES EN FORME DE BANDE

(30) Priorität: 06.05.2021 DE 102021111900
(43) Veröffentlichungstag der Anmeldung: 09.11.2022
(73) Patentinhaber: Technische Universität Chemnitz, 09111 Chemnitz (DE)
(72) Erfinder: Dr. Kaufmann, Jörg, 09116 Chemnitz (DE); Dr. Zipplies, Eberhard, 09120 Chemnitz (DE); Fleischmann, Marc, 14052 Berlin (DE)
(74) Vertreter: Rumrich, Gabriele

(56) Entgegenhaltungen:
- DE-U1-202013 012 538
- US-A1- 2015 306 826

## Beschreibung

Die Erfindung betrifft eine Legevorrichtung und ein Legeverfahren für bandförmiges Material, nach dem Oberbegriff des ersten und zwölften Patentanspruchs.

Das bandförmige Material liegt dabei bevorzugt als Endlosmaterial vor, welches auf eine Spule gewickelt ist.

Die Vorrichtung und das Verfahren dienen insbesondere zur Herstellung eines Halbzeuges aus mehreren Lagen von bandförmigem Material, welches beispielsweise als Textilverstärkung von Faser-Kunststoff-Verbunden einsetzbar ist.

Als bandförmiges Material kommen dabei meist Rovings zum Einsatz. Als Roving dabei wird ein Bündel, Strang oder Multifilamentgarn aus parallel angeordeten Filamenten (Endlosfasern) bezeichnet, der überwiegend in der Fertigung von Faserverbundkunststoffen (FVK) oder faserverstärkten Kunststoffen, einer Untergruppe der Verbundwerkstoffe, verwendet wird. Der Querschnitt eines Rovings ist meist elliptisch oder rechteckig. Allerdings gibt es auch Rovings mit einer leichten Schutzdrehung (z. B. 10 Drehungen/m), wodurch der Querschnitt runder wird. Am häufigsten werden Filamente aus Glas, Aramid oder Kohlenstoff zu Rovings zusammengefasst.

Zur Fertigung textiler Vorformlinge für die Textilverstärkung von Faser-Kunststoff-Verbunden (FKV) wird bandförmiges Material in Form von Verstärkungsfaserbändern (Rovings) mittels automatisierter Faserlegetechnik in bauteilnaher Form abgelegt. Mehrere direkt nebeneinander abgelegte Bänder in Form der Faserbänder, vorzugsweise ohne Lücke und Überlappung zueinander, werden gemeinsam als eine "Faserlage" bezeichnet. Ein Vorformling besteht aus mindestens einer Faserlage. Eine Faserlage besteht aus mindestens jeweils einem Faserband. Position, Faserorientierung und Anzahl der Faserbänder können individuell je Vorformling bzw. Faserlage ausgeprägt sein.

Bei der Druckschrift DE 10 2018 119 368 A1 sind zwei Greifer in Auszugrichtung des Bandes nebeneinander angeordnet. Jeder Bandübergabeeinheit ist jeweils ein Greifer zugeordnet ist und die Greifer sind einzeln und unabhängig voneinander auf zueinander parallelen Pfaden zwischen einer individuellen Maximalposition und einer Abholposition bei der Bandübergabeeinheit hin und her bewegbar sind, um Abschnitte gleichzeitig nebeneinander abzulegen.

In DE 10 2015 224 689 A1 wird eine Ablagevorrichtung für Faserrovings beschrieben. Die Vorrichtung beinhaltet eine Faserabzugseinheit und eine Ablageeinheit. Erstere besteht aus einer Bevorratungsstation für den Faserroving und einer Greifeinheit. Die Bevorratungsstation beinhaltet mehrere Umlenkelemente, die gewährleisten, dass eine bestimmte Länge des Faserrovings von der Spule abgezogen und unter einer bestimmten Fadenspannung zwischengespeichert wird. Derartige Lösungen sind in der Textilverarbeitung, aber beispielsweise auch aus der polygrafischen Technik bekannt (Tänzerwalzen +Faden-/Bahnbremsen). Damit ist gesichert, dass das Verarbeitungsgut (Roving) unter definierten Verhältnissen einer Weiterverarbeitung zugeführt werden kann. Die Greifeinheit besteht aus einem ortsfesten Greifer mit Schneideinrichtung und einem beweglichen Greifer. Letzterer kann entlang einer Bahnschiene (in der Regel linear) bewegt und frei positioniert werden. Folgende Funktionsweise liegt vor: Der bewegliche Greifer erfasst das lose Ende des Rovings und zieht eine definierte Länge ab. Danach klemmt der feststehende Greifer das andere Ende des Rovings ein und die Schneideinrichtung trennt den eingeklemmten Rovingabschnitt ab. Anschließend erfolgt die Ablage des Abschnitts auf der Unterlage. In der Anlage können sowohl eine derartige Faserabzugseinrichtung als auch mehrere parallel zueinander angeordnet sein. Sind mehrere derartige Einrichtungen vorhanden, so arbeiten diese unabhängig voneinander. Dies bezieht sich vor allem auf die Abzugslänge des Faserbands. Laut Anspruch 5 kann die Ablagefläche eine ebene oder eine gekrümmte Fläche aufweisen. Anspruch 6 und 7 beschreiben, dass die Unterlage drehbar und vertikal zur Abzugsrichtung bewegbar ausgeführt sein kann. In den folgenden Ansprüchen werden Zusatzelemente benannt, die dazu dienen, eine sichere Manipulation des Rovingabschnitts sicher zu stellen (Niederhalter, Klemmen usw.). Es treffen die Merkmale M1a und M2a zu. Entgegen dem Anliegen der Erfindermeldung muss der bewegliche Greifer beim Abzug eines neuen Rovingabschnitts einen Leerhub ausführen. In DE 10 2018 119 368 A1 werden eine Vorrichtung und ein Verfahren zur Herstellung von Faserstacks beschrieben. Dabei arbeitet das beschriebene Ablagesystem quasi identisch wie das unter der vorgenannten Lösung bereits beschriebene.

In AT 517 938 B1 wird eine Fertigungsanlage zum Legen von Faserbändern beschrieben. Die Vorrichtung besteht aus einer Abrollvorrichtung, einer Ablagevorrichtung, einer Manipulationsvorrichtung und einer Ablagefläche. Dabei befinden sich auf der Abrollstation mehrere Aufnahmevorrichtungen nebeneinander. Diese bestehen aus einer Spule, auf der das Band aufgewickelt ist, mehreren Umlenkrollen, einer Klemmeinrichtung und einer Schneideinrichtung. Unterhalb der Abrollstation ist die Ablagevorrichtung angeordnet. Diese ist quer zur Transportrichtung segmentiert und vorzugsweise als Bandförderer (Absatz 00110) oder Ablageprofil ausgebildet. Die Arbeitsorgane der Ablagestation (Bänder/Ablageprofile) sind mit Fixiervorrichtungen, vorzugsweise Vakuumsaugern, ausgerüstet und können unabhängig voneinander translatorisch bewegt werden. Jedem Arbeitsorgan (Band/Ablageprofil) der Ablagestation ist eine Aufnahmestation der Abrollstation zugeordnet. Gibt die Klemmeinrichtung der Aufnahmevorrichtung das Band frei, so wird dieses vom Arbeitsorgan der Ablagestation erfasst und abgezogen. Ist die erforderliche Länge erreicht, wird das Band wieder eingeklemmt und anschießend abgeschnitten. Danach erfolgt das translatorische Positionieren des Bandabschnitts durch das Arbeitsorgan der Ablagestation. Dieser Vorgang wird durch alle Arbeitsorgane der Ablagestation und alle Aufnahmestationen der Abrollstation parallel und zeitgleich vollzogen. Somit entsteht eine "Schicht" des zu erzeugenden Bauteils. Durch die Manipulationseinrichtung erfolgt im Anschluss das Transferieren der "Schicht" zur Ablagefläche, wo ein Stapel gebildet wird. Die Klemm- und Schneideinrichtung der Abrollstation stellt die ortsfeste Greifeinheit im Sinne der Erfindermeldung und das Arbeitsorgan mit Fixiereinheit der Ablagestation den beweglichen Greifer dar. Sind die Arbeitsorgane der Ablagestation als Ablageprofile ausgebildet, so ist hier ebenfalls ein Leerhub, erforderlich. Handelt es sich jedoch um umlaufende Bänder entfällt dieser. Nachteilig zu nennen ist, dass ein erheblicher anlagentechnischer Aufwand betrieben werden muss und Einschränkungen hinsichtlich der Bauteilgestaltung im Vergleich zu frei positionierbaren Greifsystemen zu erwarten sind.

In DE 10 2011 007 018 A1 und DE 10 2012 218 178 A1 werden eine Vorrichtung und ein Verfahren zur Herstellung von Faservorformlingen beschrieben. Dabei sind mehrere Greifer an Geradführungen über einem Formwerkzeug angeordnet. Die Greifer können sich dabei unabhängig voneinander zwischen einer Übergabeposition und einer Maximalposition bewegen. Laut Anspruch 2 ist das freie Positionieren zwischen diesen beiden Positionen möglich. Somit sind beliebig lange Faserabschnitte verarbeitbar. Laut Anspruch 10 sind Schneideinrichtungen angeordnet, die nach dem Abzug des Rovings diesen von der Bevorratung trennen. Um den Winkel, unter dem der Faserabschnitt auf dem Formwerkzeug abgelegt wird, zu verändern, kann das Formwerkzeug gedreht werden. Nach Ablage des Faserabschnitts muss der Greifer auch hier einen Leerhub ausführen, um zur Übergabeposition zurückzukehren. Somit treffen nur die Merkmale

In DE 20 2014 100 513 U1 ist eine Tapelegevorrichtung zum Aufbau eines Laminats beschrieben. Laut Anspruch 1 kommen dabei eine Zuführeinrichtung und eine Ablegeeinrichtung zur Anwendung. Der Anspruch 2 stellt dabei unter Schutz, dass die Ablegeeinrichtung die Tapes einzieht, ablängt und ablegt. Wie dies erfolgt, wird jedoch nicht näher ausgeführt. Die Darstellungen in den Figuren lassen jedoch den Schluss zu, dass die Ablegevorrichtung auch bei dieser Lösung einen Leerhub ausführen muss.

Zur Herstellung von bauteilformnahen Vorformlingen mittels Faserlegetechnik werden somit nach dem Stand der Technik die Faserbänder (Rovings) beispielsweise von einer Spule abgezogen, auf eine definierte Faserbandlänge ausgezogen und geschnitten, dann mit gewünschtem Orientierungswinkel an einem definierten Ort in bauteilnaher Kontur, z. B. auf einen Ablagetisch platziert. In marktüblichen Faserlegetechniken erfolgt dieser Ablegeprozess mittels eines Greiferpaars. Das Greiferpaar bewegt sich unabhängig voneinander entlang einer Linearachse und zieht ein Faserband aus. Dann wird das Faserband geschnitten und mittels des Greiferpaares über einen Untergrund oder eine bereits gelegten Faserlage transportiert und mit Hilfe von Niederhaltern und Absenkung der Linearachse abgelegt. In der Regel erfolgt die Ablage mehrere Faserlagen mit unterschiedlichen Orientierungswinkeln und zum Teil unterschiedlichen Abmaßen (Länge und/oder Breite) übereinander.

US 2015/306826 A1 offenbart den Oberbegriff des Anspruchs 1.

Die Faserbandablage mittels eines herkömmlichen Greiferpaares hat zum Nachteil, dass wenigstens ein Greifer zum Aufnehmen des Faserbands zum Ende des zuvor geschnittenen Faserbands zurückbewegt werden muss, um den Ablegeprozess des Greiferpaars erneut zu beginnen (Leerfahrt).

Stand der Technik ist es somit, dass Greiferpaare Faserbänder aus einer einzigen Halbzeugvorlage (bspw. Spulengatter entnehmen. Zum Halbzeugwechsel muss daher die Anlage angehalten und ein neues Faserband in die Anlage eingezogen werden. Aufgabe der Erfindung ist es, eine Legevorrichtung und ein Legeverfahren für bandförmiges Material zu entwickeln, mit welchen die Prozesszeiten für das Legen des bandförmigen Materials reduzierbar sind und unterschiedliche Materialien in beliebiger Reihenfolge abgelegt werden.

Diese Aufgabe wird mit den Merkmalen des ersten und dreizehnten Anspruchs gelöst, Vorteilhafte Ausgestaltungen ergeben sich aus den Unteransprüchen.

Die Erfindung betrifft eine Legevorrichtung für bandförmiges Material (nachfolgend Band genannt) mit einem ersten Greifersystem zum Ausziehen eines ersten Bandes aus einem ersten Speicher sowie mit einer ersten Trenneinrichtung und einer Ablagefläche zum Ablegen eines abgetrennten Bandabschnittes des ersten Bandes, wobei das erste Greifersystem und die Ablagefläche relativ zueinander in mehreren Achsen bewegbar sind und wobei das erste Greifersystem wenigstens einen ersten axial bewegbaren Greifer zum Greifen des Bandes aufweist, der entlang einer Längsachse zum Ausziehen und Positionieren des Bandes bewegbar ist, dadurch gekennzeichnet, dass die Legevorrichtung mindestens ein zweites Greifersystem mit wenigstens einem zweiten Greifer zum Ausziehen eines zweiten Bandes aus einem zweiten Speicher aufweist, wobei der erste und der zweite Greifer aufeinanderzu und voneinanderweg bewegbar sind, wobei
vorteilhafter Weise zwischen dem ersten und dem zweiten Greifersystem ein Pendelgreifer angeordnet ist, der zwischen dem ersten und dem zweiten Greifersystem hin und her bewegbar und dazu ausgeführt ist, das erste Band und das zweite Band abwechselnd auf eine erforderliche Länge auszuziehen und auf der Ablagefläche abzulegen. Das Ablegen erfolgt dabei nach Abtrennen eines jeweiligen Bandabschnitts unter Verwendung des in Richtung zum Pendelgreifer angeordneten Greifers des jeweiligen Greifersystems, der den Bandabschnitt gemeinsam mit dem Pendelgreifer greift, zur Ablageposition überführt und dort ablegt.

Dadurch ist es möglich, mit einem Greifersystem bereits ein Band zuzuführen, während das andere Band abgelegt wird oder abgelegt wurde.

Vorteilhafter Weise ist das zweite Greifersystem in Richtung des ersten Greifersystems bewegbar, wenn ein Bandabschnitts des ersten Bandes in einer Position zum Ablegen auf dem Tisch angeordnet ist und dass das erste Greifersystem in Richtung zum zweiten Greifersystem bewegbar ist, wenn ein Bandabschnitt des zweiten Bandes in einer Position zum Ablegen auf dem Tisch angeordnet ist.

Das erste Greifersystem und das zweite Greifersystem sind bevorzugt auf einer gemeinsamen horizontalen Längsachse relativ zueinander bewegbar. Dabei ist der Pendelgreifer ebenfalls auf dieser Längsachse zwischen dem ersten und zweiten Greifersystem verfahrbar.

Eine vorteilhafte Ausführung der Erfindung besteht darin, dass das Band über den Pendelgreifer zugeführt wird, der zwischen dem ersten und dem zweiten Greifer verfahrbar ist.

Die Ablagefläche ist auf einem Tisch (Ablagetisch) ausgebildet, der um eine vertikale Drehachse drehbar und in horizontal in zwei Achsen (X und Y) verfahrbar ist. Weiterhin kann der Ablagetisch vertikal entlang der Z-Achse verfahrbar sein.

Anstelle des Tisches oder zusätzlich kann auch das Greifsystem um die vertikale Z-Achse drehbar und entlang dieser verfahrbar ausgeführt sein.

Bevorzugt stehen das erste Greifersystem und das zweite Greifersystem mit einer entlang der Längsachse A verlaufenden Führungsbahn in Eingriff stehen und sind entlang der Führungsbahn axial verfahrbar.

Der Speicher des Bandes ist bevorzugt als Spule ausgebildet, wobei in einer möglichen Variante wenigstens einem Greifersystem ein Vorlagesystem zur Aufnahme mehrerer Spulen zugeordnet ist.

Die Zuführung der Bänder zu den Greifersystemen mit den Klemmgreifern erfolgt bevorzugt pneumatisch oder auch vorzugsweise über Injektoren.

Vorteilhafter Weise ist dem ersten und zweiten Greifersystem jeweils eine Trenneinrichtung zugeordnet, die in einer Auszugsrichtung des Bandes hinter oder innerhalb des ersten und/der zweiten Greifersystems angeordnet ist.

Zwischen dem ersten und/oder dem zweiten Greifersystem und/oder innerhalb des ersten und/oder zweiten Greifersystems können ein oder mehrere Zusatzgreifer angeordnet sein.

Das erfindungsgemäße Legeverfahren für bandförmiges Material (nachfolgend Band genannt) mit einem ersten Greifersystem mit wenigstens einem ersten Greifer zum Abziehen eines ersten Bandes aus einem ersten Speicher auf eine vorbestimmte Länge, Abtrennen eines Bandabschnittes mit einer Abschnittslänge von dem ersten Band Ablegen des Bandabschnittes auf einer Ablagefläche und Rückhub des ersten Greifers auf eine Ausgangsposition, realisiert während des Zuführens und/oder Ablegens des ersten Bandabschnittes auf die Ablagefläche oder während des Rückhubes des ersten Greifersystems mittels wenigstens eines weiteren zweiten Greifersystems mit wenigstens einem zweiten Greifer aus einem weiteren zweiten Speicher ein zweites Band auf eine vorbestimmte Länge abgezogen wird, wobei sich der zweite Greifer in Richtung des ersten Greifers bewegt, Abtrennen eines zweiten Bandabschnittes vom zweiten Band mit Ablegen des zweiten Bandabschnittes auf der Ablagefläche und/oder dem ersten Bandabschnitt und Rückhub des zweiten Greifers auf eine Ausgangsposition.

Dabei vollführt der zweite Greifer mit dem zweiten Band einen Vorhub, während der erste Bandabschnitt abgelegt wird und/oder der erste Greifer vollführt mit dem ersten Band einen Vorhub, während der zweite Bandabschnitt abgelegt wird.

Vorteilhafter Weise ist zwischen dem ersten und dem zweiten Greifer ein Pendelgreifer hin- und her bewegbar, der abwechselnd das erste Band und das zweite Band greift und den ersten Bandabschnitt mit dem ersten Greifer und den weiteren Bandabschnitt mit dem weiteren Greifer zur Ablageposition bewegt und an dieser abliegt.

Während und/oder zwischen einer Vorhubbewegung oder einer Rückhubbewegung des ersten oder zweiten Greifers kann eine ein oder mehrachsige Relativbewegung zwischen einem Tisch, auf dem die Ablagefläche ausgebildet ist und den Greifersystemen erfolgen, so dass die Bandabschnitte in Winkel zueinander abgelegt werden können.

Weiterhin kann ein Tisch während und/oder zwischen einer Vorhubbewegung oder einer Rückhubbewegung des ersten oder weiteren Greifers eine Rotationsbewegung um eine vertikale Achse und/oder eine Linearbewegung in X- und/oder Y-Richtung und/oder eine Linearbewegung in Z-Richtung vollführen.

Der Tisch kann beispielsweise als Rundtisch ausgeführt sein.

Weiterhin kann gemäß einer weiteren Variante das Greifsystem eine Relativbewegung um die Z-Achse und entlang dieser ausführen.

Die in der Vorrichtung verwendeten Greifer bzw. die in den Greifern verwendeten Klemmzylinder zum Greifen des Bandes werden bevorzugt pneumatisch betätigt. Selbstverständlich sind auch andere übliche Antriebsarten einsetzbar.

Es ist Anspruch dieser Erfindung, dass das Greifersystem die Bänder (z.B. Faserbänder) aus einem vorzugsweise revolverförmig angeordneten oder anderweitig ausgeführten Halbzeugvorlagesystem entnimmt. Das Halbzeugvorlagesystem besteht aus wenigstens zwei Halbzeugspeichern. Die Halbzeugspeicher beherbergen die Bänder (z.B. Faserbänder), vorzugsweise auf Spulkörpern. Die Halbzeugspeicher besitzen vorzugsweise eine Zugkraftregulierung, um die auf das Faserband über die Greifer wirkende Abzugkraft einstellen zu können. Der Halbzeugspeicher erlaubt zudem ein Wiederaufrollen von rückgefördertem Faserband. Das Wiederaufrollen/Zwischenspeichern/Rückhalten von zurückgefördertem Faserband kann dabei auch/unterstützend durch einen separaten Faserbandspeicher realisiert sein. Die einzelnen Halbzeugspeicher können vorzugsweise mittels des Revolversystems im Anlagenbetrieb automatisiert gewechselt, zugeführt und entnommen werden. Ein Anlagenstillstand entfällt somit.

Der Wesentliche Vorteil der erfindungsgemäßen Lösung besteht darin, dass zwischen dem Ablegen eines Bandabschnittes und dem Zuführen eines weiteren Bandabschnittes kein Leerhub mehr erfolgt, da bereits beim Anlegen eines Bandabschnittes der nächste Bandabschnitt zugeführt wird. Dadurch können die Zeiten zum Bauen des Halbzeuges aus mehreren Lagen wesentlich verkürzt werden. Dies wird erfindungsgemäß mittels eines Pendelgreifers realisiert, der zwischen zwei sich gegenüberliegend angeordneten Greifersystemen verfährt und abwechselnd das daraus bereitgestellte Band abzieht.

Das Band kann beispielsweise ein Faserband (Roving) aus textilen Fasern, Aramidfasern, Glasfasern, Carbonfasern, Bastfasern und dergleichen oder auch aus einer Kombination verschiedener Fasern bestehen. Aber auch jedes andere Band (z.B. Metallband bzw. bandförmige Folie aus Stahl oder Aluminium, Kunststoff) oder flexible, spul-/wickelbare Halbzeug/Bande (Draht, Heizdraht, Sensordraht, Kabel, Schlauch, usw.) kann mittels der Vorrichtung und des Verfahrens gelegt werden und dabei beispielsweise auch mit Bändern aus anderen Materialien (z.B. Faserband) kombiniert werden.

Weiterhin kann das Band einen flachen Querschnitt aufweisen. Aber auch beispielsweise ein bandförmiges Endlosmaterial mit beliebigem Querschnitt (z.B. quadratisch oder kreisförmig, elliptisch und auch hohl), welches sich wie vorgenannt von einem Materialspeicher abziehen, auf Längs schneiden und ablegen lässt, kann mit der erfindungsgemäßen Lösung verarbeitet werden.

Weiterhin wird unter bandförmigem Material auch ein Endlosmaterial wie beispielsweise Kabel, z.B. elektrisches Kabel, Sensorkabel oder dergleichen verstanden.

Beispielsweise kann die Vorrichtung auf der Seite des ersten oder weiteren Greifersystems eine oder mehrere Spulen mit Faserband und zumindest eine Spule mit Sensorkabel enthalten. In den Stapel aus Bandabschnitten kann bei deren Legen beispielsweise ein Sensor eingelegt werden. Es besteht dann auch die Möglichkeit, den Sensor mit einem Sensorkabel zu verbinden, welches entsprechend beim Legen mit dem Sensor kontaktiert wird.

Nach dem Legen eines Stapels werden die einzelnen Bandlagen zu einem Halbzeug miteinander vorzugsweise unlösbar verbunden, welches beispielsweise als Textilverstärkung von Faser-Kunststoff-Verbunden, oder anderen (Hybrid)materialverbunden) einsetzbar ist.

Die Erfindung wird nachfolgend anhand von Ausführungsbeispielen und zugehörigen Zeichnungen näher erläutert.

Es zeigen:
- Figuren 1 bis 3: den Stand der Technik,
- Figuren 4 bis 20: eine erste Variante der Erfindung und dabei:

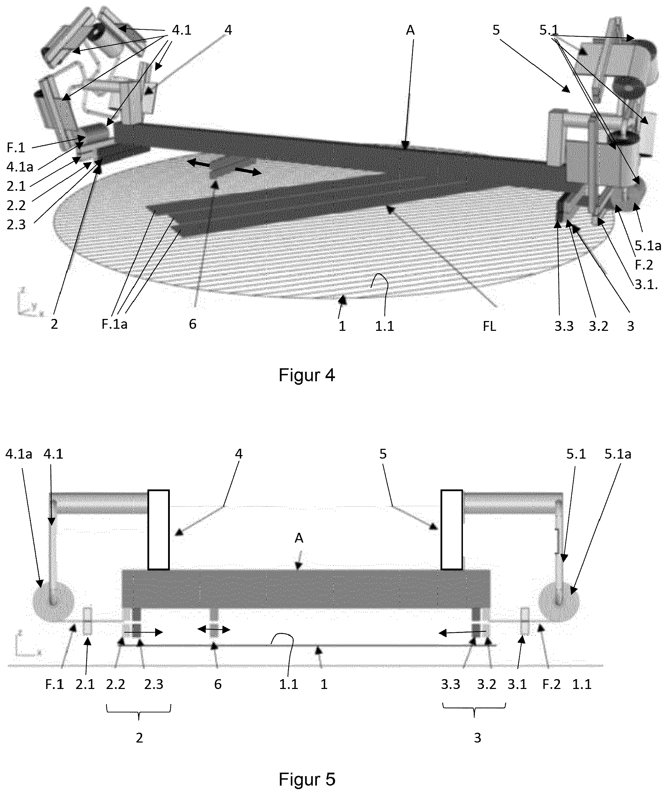

- Figur 4: dreidimensionale Prinzipdarstellung des erfindungsgemäßen Greifer-Legesystem mit zwei Halbzeugspeichern und mit Pendelgreifer 6 in einer Ausgangsposition vor Beginn eines Legevorganges,
- Figur 5: Seitenansicht gemäß Figur 4,

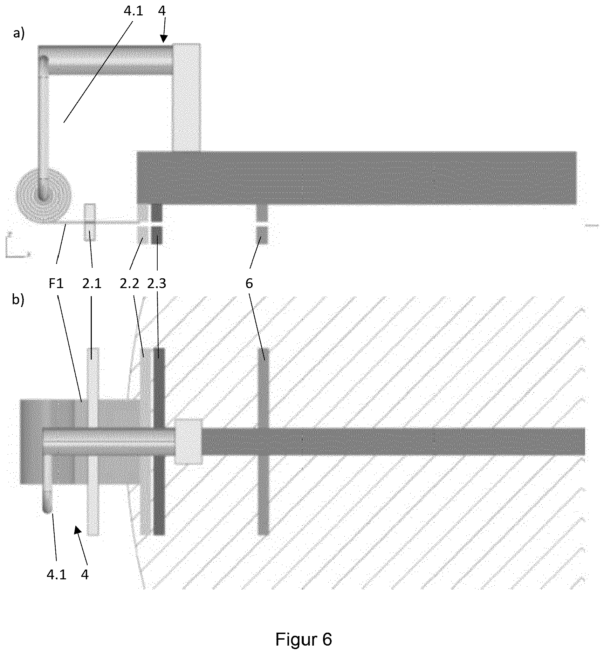

Die Figuren 6-18 zeigen den detaillierten Verfahrensablauf beim abwechselnden Ausziehen und Ablegen zweier Faserbänder F1, F2 und dabei:
- Figur 6: Draufsicht eines Halbzeugspeichers in Ausgangsposition,

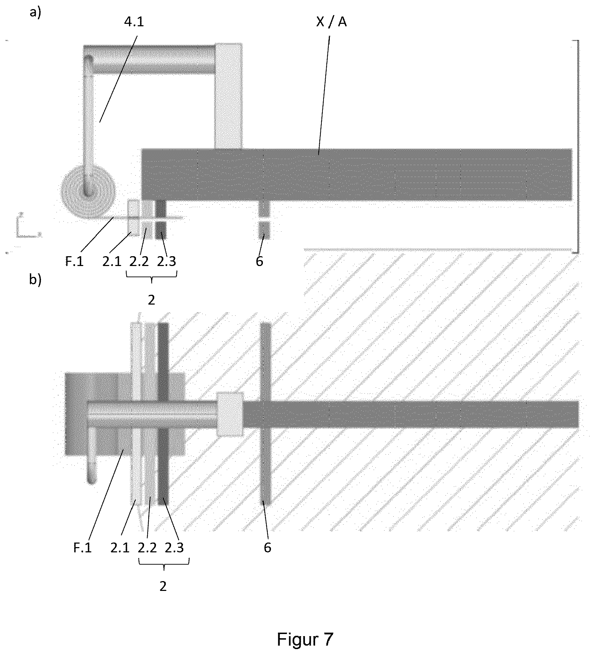

- Figur 7: a) Seitenansicht und b) Draufsicht eines Halbzeugspeichers beim Zuführen eines Faserbandes,

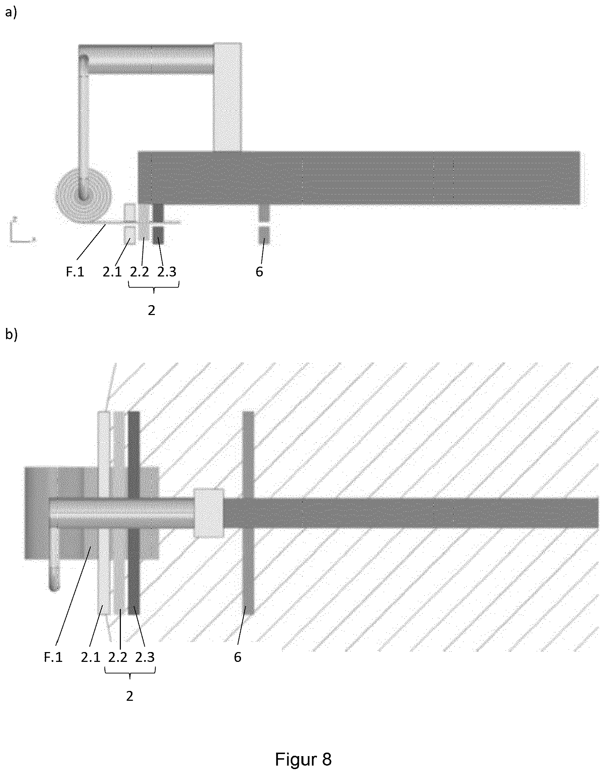

- Figur 8: a) Seitenansicht und b) Draufsicht eines Halbzeugspeichers beim Übernehmen des Faserbandes durch das hier erste Greifersystem,

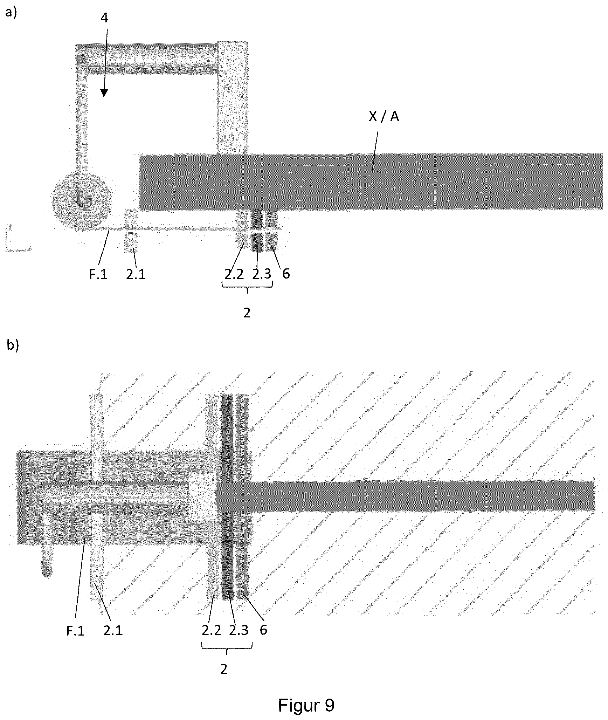

- Figur 9: a) Seitenansicht und b) Draufsicht eines Halbzeugspeichers beim Transport / Ausziehen des Faserbandes,

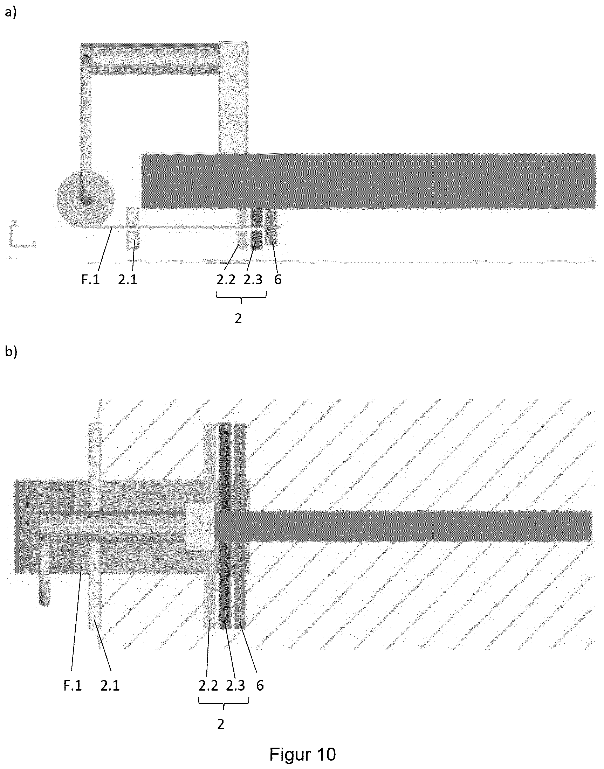

- Figur 10: a) Seitenansicht und b) Draufsicht beim Übernehmen des Endes des Faserbandes durch den Pendelgreifer,

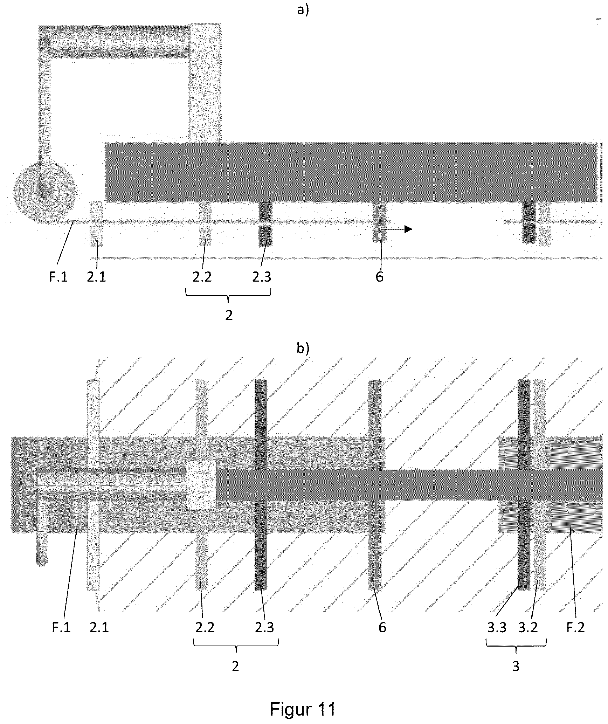

- Figur 11: a) Seitenansicht und b) Draufsicht beim Auszug des Faserbands FA auf gewünschte Faserbandlänge mittels des Pendelgreifers,

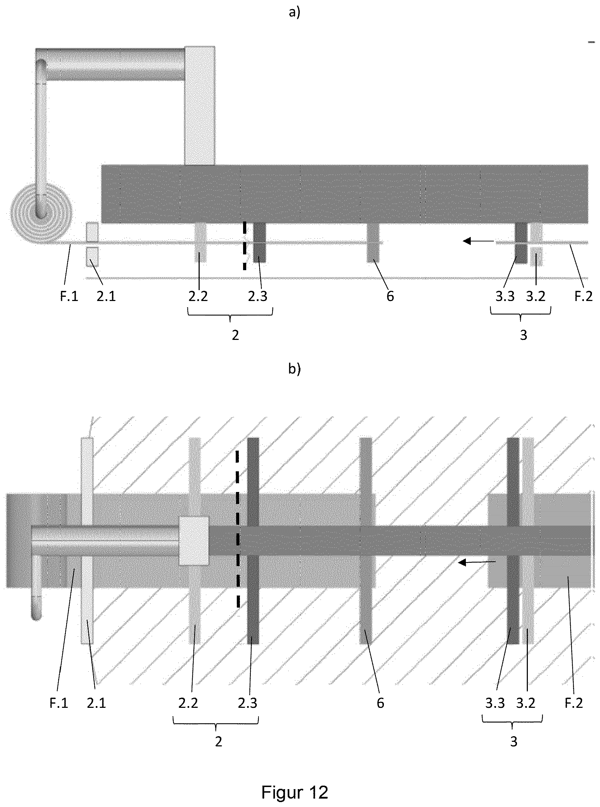

- Figur 12: a) Seitenansicht und b) Draufsicht beim Schneiden des Faserbandes auf die erforderliche Länge,

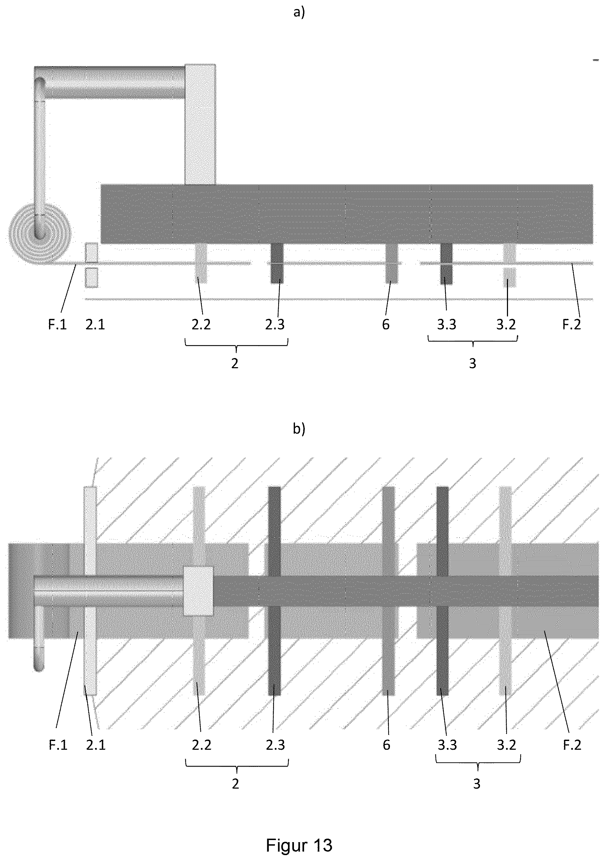

- Figur 13: a) Seitenansicht und b) Draufsicht beim Transport des auf Länge geschnittenen Faserbandes an die gewünschte Ablageposition,

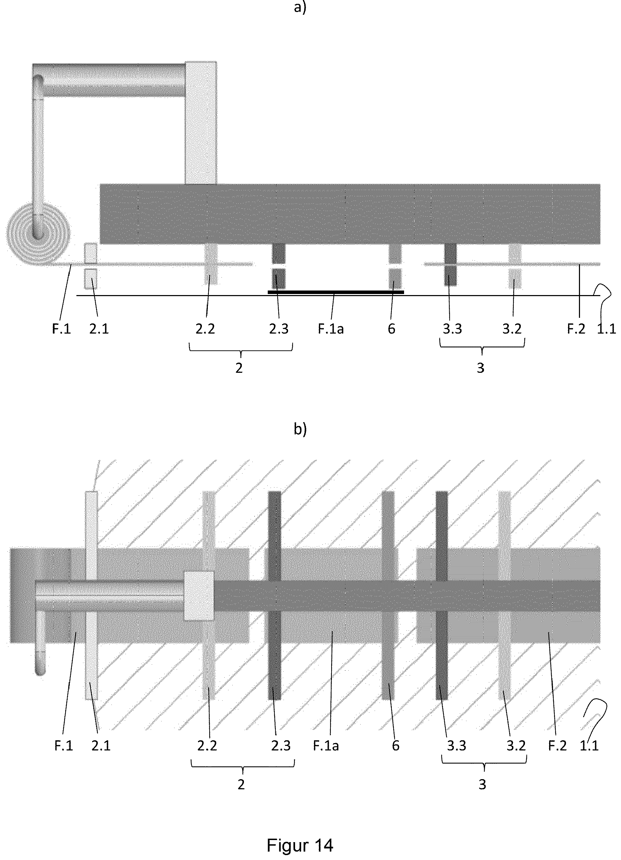

- Figur 14: a) Seitenansicht und b) Draufsicht nach Ablegen des ersten Faserbandes und bei in einer Übergabeposition des zweiten Greifersystems befindlichem zweiten Faserband,

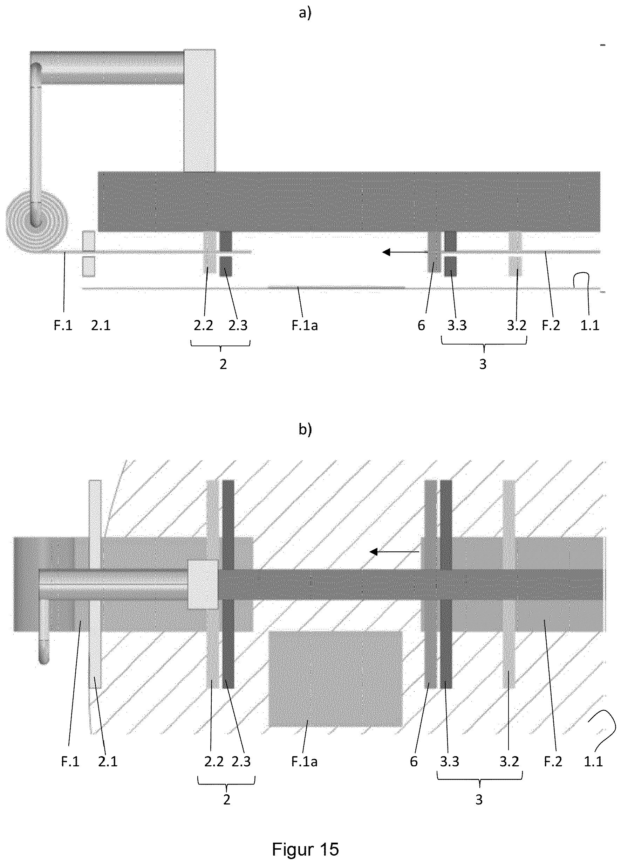

- Figur 15: a) Seitenansicht und b) Draufsicht des ersten abgelegten Faserbandes und des mittels des Pendelgreifers erfassten Endes des zweiten Faserbandes,

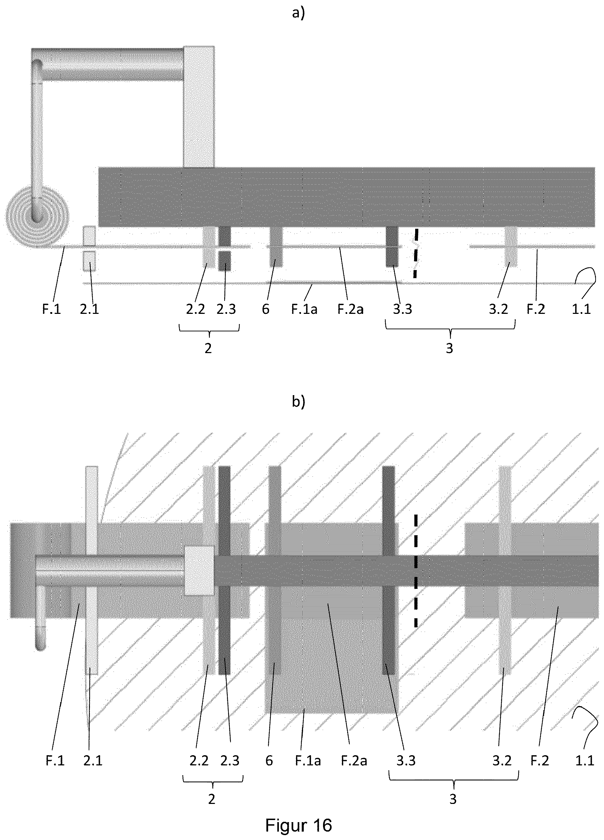

- Figur 16: a) Seitenansicht und b) Draufsicht nach dem Trennen/Schneiden des zweiten Faserbandes und dessen Überführung in die Ablageposition mittels des Pendelgreifers und des Greifers des zweiten Greifersystems,

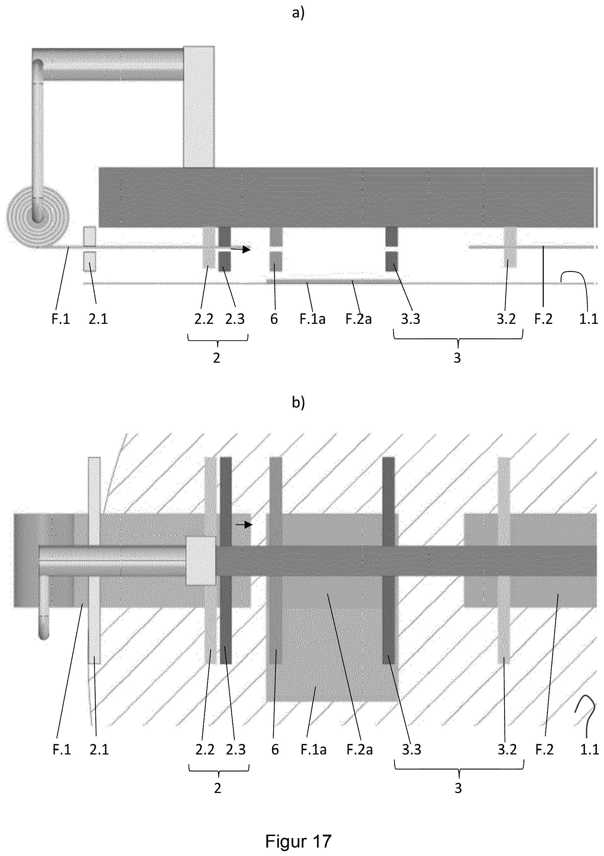

- Figur 17: a) Seitenansicht und b) Draufsicht nach dem Ablegen des zweiten Faserbandes in einer zum ersten abgelegten Faserband versetzten Position,

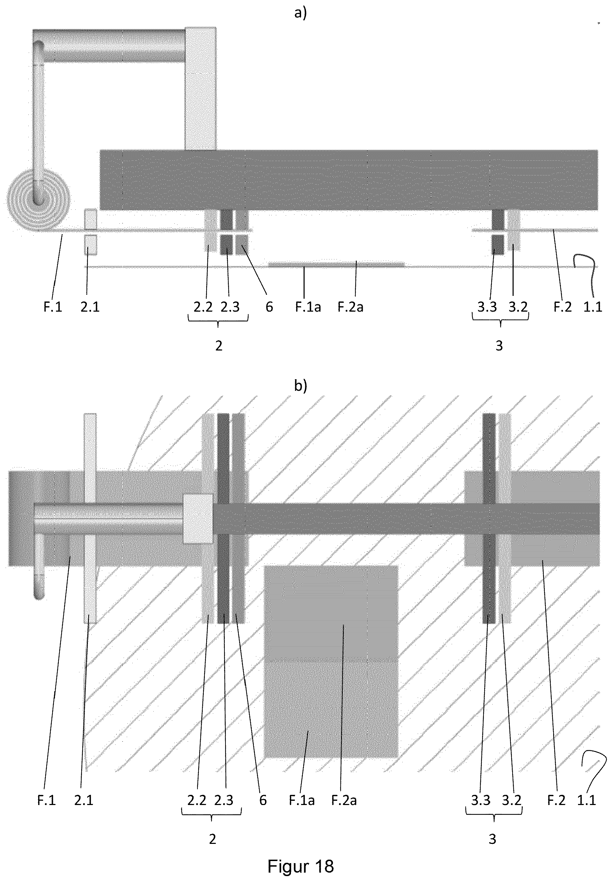

- Figur 18: a) Seitenansicht und b) Draufsicht beim erneuten Greifen des ersten Faserbandes durch den Pendelgreifer,

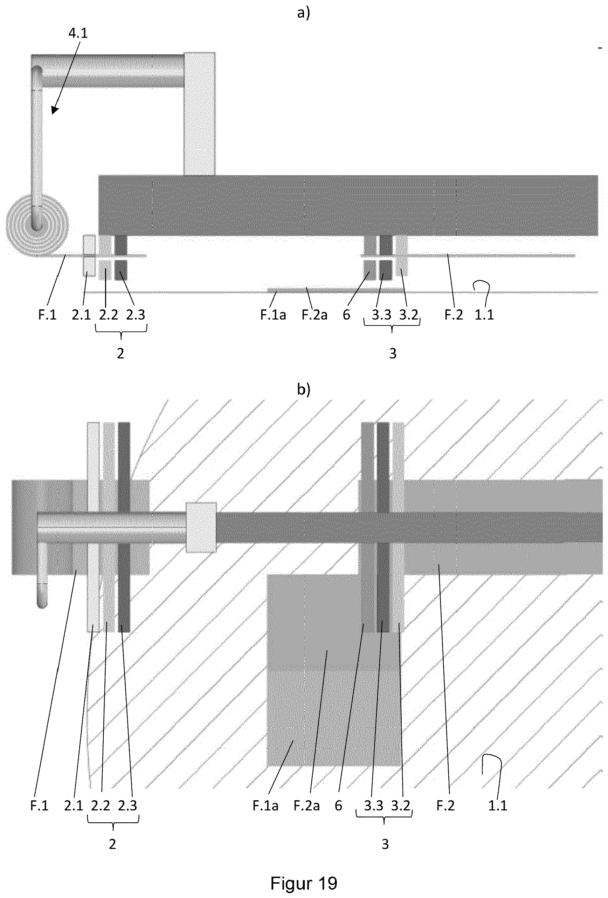

- Figur 19: Entnehmen des ersten Faserbandes aus dem Greifersystem.

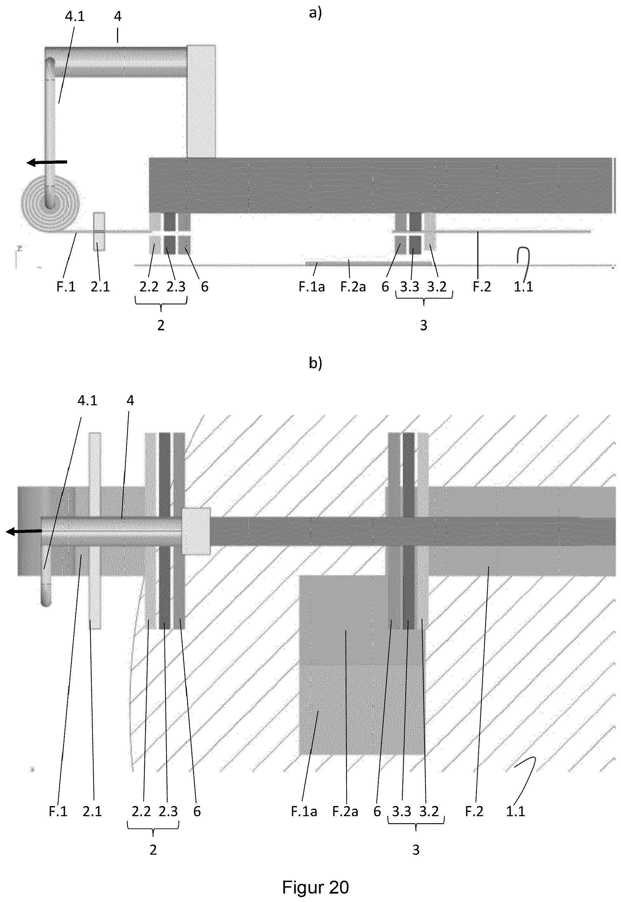

- Figur 20: Entnehmen des ersten Faserbandes,

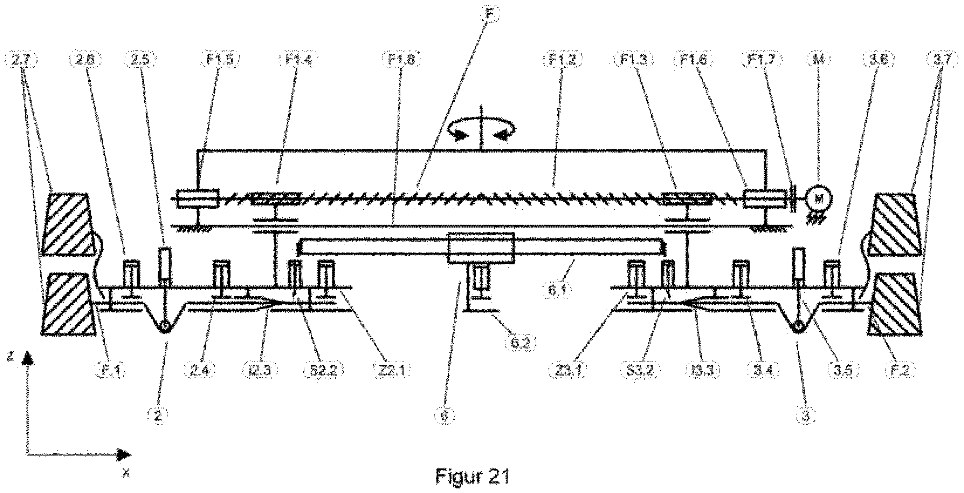

- Figur 21: die Prinzipdarstellung einer weiteren Variante der Erfindung in der Seitenansicht.

Anhand der nachfolgenden Ausführungsbeispiele werden das Verfahren und die Vorrichtung für das Legen von Faserbändern (Rovings) beschrieben.

Zur Fertigung textiler Vorformlinge für die Textilverstärkung von Faser-Kunststoff-Verbunden (FKV) werden (Verstärkungs-)Faserbänder mittels automatisierter Faserlegetechnik in bauteilnaher Form abgelegt. Mehrere direkt nebeneinander abgelegte Faserbänder, vorzugsweise ohne Lücke und Überlappung zueinander, werden gemeinsam als eine "Faserlage" bezeichnet. Ein Vorformling besteht aus mindestens einer Faserlage. Eine Faserlage besteht aus mindestens jeweils einem Faserband. Position, Faserorientierung und Anzahl der Faserbänder können individuell je Vorformling bzw. Faserlage ausgeprägt sein.

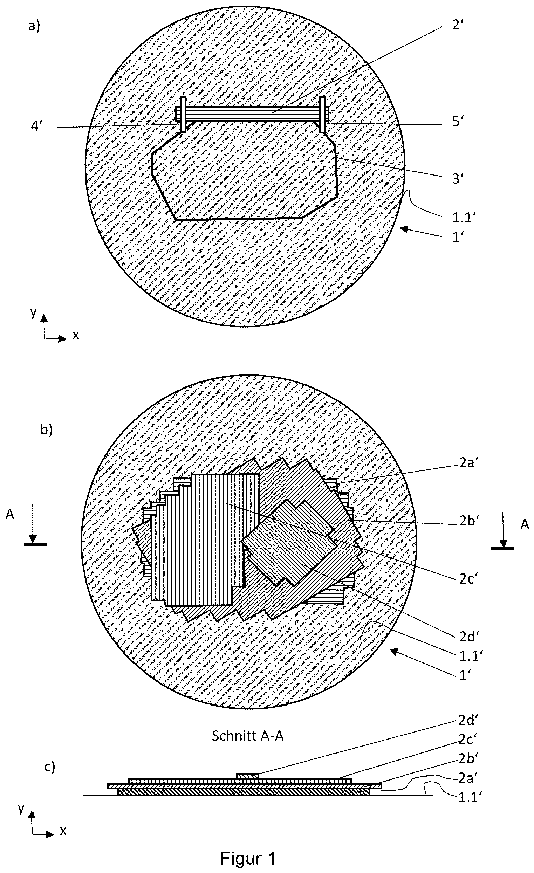

In Figur 1 ist nach dem Stand der Technik in Darstellung a) ein Ablagetisch (Rundtisch) 1' mit einem Abschnitt eines abzulegendes Faserbandes 2' dargestellt, wobei das Polygon 3` die Fläche kennzeichnet, über welcher die der Abschnitt des Faserbandes 2' und weitere zur Bildung der Faserlagen abgelegt werden sollen. Der Abschnitt des Faserbandes 2` wurde von einem nicht dargestellten Spulenspeicher abgezogen, auf Länge abgeschnitten und mittels zweier Greifer 4', 5` über dem Tisch 1' zu der vorgesehenen Ablageposition verbracht und an dieser auf der Ablagefläche 1.1' des Ablagetisches 1' abgelegt.

Die Ablage des ersten Abschnittes 2' des Faserbands der ersten Faserlage erfolgt somit entlang der Bauteilkontur (Polygon 3') mittels des Greiferpaares 4', 5`. Das Greiferpaar 4', 5` ist verfahrbar auf einer horizontalen Linearachse entlang der X-Achse.

Die Darstellung b) zeigt mehrere übereinander angeordnete aus Abschnitten von Faserband gelegte Faserlagen 2a`, 2b`, 2c`, 2d` (Preform) der Draufsicht und c) im Schnitt A-A gemäß Darstellung b) auf der Ablagefläche.

Gemäß Darstellung b) entspricht die Kontur des mit dem Vorformling (Preform) herzustellenden Bauteils in etwa der blauen Umrisslinie gemäß Darstellung a). Die Ablage der Faserlagen 2a` bis 2d` erfolgte nacheinander. Jede Faserlage 2a` bis 2d` besteht aus mindestens einem Faserband, hier aus mehreren nebeneinander abgelegten Faserbändern. Jede Faserlage 2a` bis 2d` kann in ihrer Position, Faserorientierung und Anzahl der Faserbänder individuell sein.

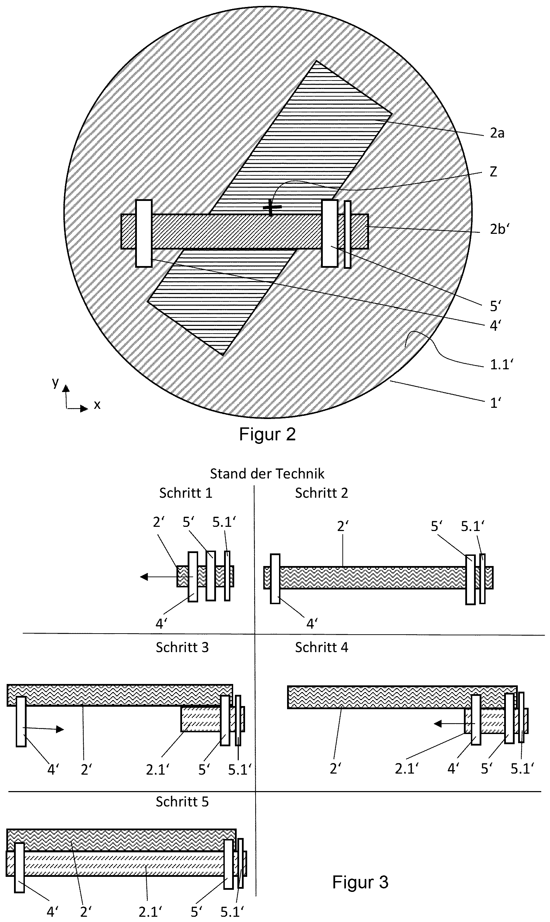

Figur 2 zeigt den Stand der Technik beim Faserlegen. Der Ablegegrund/die Anlagefläche 1.1(schraffiert) ist mit dem Ablagetisch 1' um eine Vertikale Achse z drehbar und horizontal in x-y Richtung verstellbar. Eine erste Faserlage 2a wurde bereits abgelegt, hier bestehend aus drei Abschnitten eines Faserbandes. Der Ablagetisch 1' wurde daraufhin um die vertikale Drehachse gedreht, so dass nun eine weitere Ablage eines Faserbands mittels zweier Greifer 4`, 5` entlang der X-Achse, als zweite Faserlage 2b` auf die erste Faserlage 2a` bzw. den Ablagefläche 1.1' mit variiertem, frei gewähltem Ablegeort und Faserorientierungswinkel bzw. Ablegegrund-Rotationswinkel erfolgen kann. Die Ablagefläche 1.1 (schraffiert) mit der ersten Faserlage 2a` wurde vor der Ablage der zweiten Faserlage 2b` mit einem definierten Winkelversatz von 125° in der XY-Ebene rotiert.

In Figur 3 ist ein weiterer Stand der Technik in Form des Faserlegeprozesses mit einem Greiferpaar aus Greifern 4` und 5` mit Leerfahrt dargestellt. Es zeigen hier:
Schritt 1: Faserbandzuführung an Greifer 5`, Greifer 4` zieht Abschnitt eines Faserbandes 2' aus.
Schritt 2: Faserbandauszug auf gewünschte Länge durch Greifer 4`. Schnitt des Faserbands an Greifersystem 5` zwischen Greifer 5` und zusätzlichem Greifer A1. Greifer 5` und 4` legen Faserband 2` gemeinsam ab.
Schritt 3: Versatz der nicht dargestellten Ablagefläche und somit des abgelegten Faserbandes 2` um eine Faserbandbreite.
Schritt 4: Leerfahrt von Greifer 4` zur Aufnahme des nächsten Faserbands 2.1' an Greifer 5.
Schritt 5: Auszug des nächsten Faserbandes 2.1' durch den Greifer 4. Nachteilig ist auch hier die Leerfahrt.

Die Figuren 4 und 5 zeigen in 3D Darstellung und in der Seitenansicht eine Prinzipdarstellung der erfindungsgemäßen Lösung.

Sich gegenüberliegend sind an einem Tisch 1 ein erstes Greifersystem 2 und ein zweites Greifersystem 3 angeordnet, so dass der Tisch 1 mit der Ablagefläche 1.1 und die Greifersysteme 2, 3 relativ zueinander um eine vertikale Z-Achse drehbar sind. Bevorzugt ist hier der Tisch 1 um die z-Achse drehbar und zusätzlich linear in x, y und z-Richtung verfahrbar.

Das erste Greifersystem 2 entnimmt erste Faserbänder F.1 aus einem hier beispielsweise revolverförmig angeordneten ersten Halbzeugvorlagesystem. 4 und das zweite Greifersystem 3 entnimmt zweite Faserbänder F.2 aus einem hier ebenfalls beispielsweise revolverförmig angeordneten zweiten Halbzeugvorlagesystem 5. Das erste Halbzeugvorlagesystem 4 besteht aus wenigstens zwei Halbzeugspeichern 4.1, hier aus fünf Halbzeugspeichern 4.1 und das zweite Halbzeugvorlagesystem 5 besteht ebenfalls aus wenigstens zwei Halbzeugspeichern 5.1, hier aus fünf Halbzeugspeichern 5.1. Die ersten Halbzeugspeicher 4.1 beherbergen erste Faserbänder F.1, vorzugsweise auf Spulkörpern 4.1a und die zweiten Halbzeugspeicher 5.1 beherbergen zweite Faserbänder F.1, vorzugsweise ebenfalls auf Spulkörpern 5.1a. Die Halbzeugspeicher 4.1, 5.1 besitzen eine nicht dargestellte Zugkraftregulierung, um die auf das erste bzw. zweite Faserband F.1, F.2 wirkende Abzugkraft einstellen zu können. Die Zugkraftregulierung erlaubt dem Halbzeugspeicher 4.1, 5.1 zudem ein Wiederaufrollen von rückgefördertem Faserband (siege Figuren 19 und 20). Die einzelnen Halbzeugspeicher 4.1, 4.2 können mittels des hier revolverförmigen jeweiligen Halbzeugvorlagesystems 4, 5 im Anlagenbetrieb automatisiert gewechselt, zugeführt und entnommen werden. Ein Anlagenstillstand entfällt somit.

Das vorzugsweise revolverförmige erste Halbzeugvorlagesystem 4 und das zweite Halbzeugvorlagesystem 5 sind entlang der Legeachse A verfahrbar und dem jeweiligen Greifersystem 2, 3 zugeordnet. Zur Zuführung und Entnahme von ersten und zweiten Faserbändern F.1, F.2 in das erste und zweite Greifersystem 2, 3 können die Halbzeugvorlagesysteme 4, 5 entlang der Legeachse A zum (Lege-)Greifersystem 2, 3 hin bzw. davon wegbewegt werden. Zur Zuführung des ersten und zweiten Faserbandes F.1, F.2 weist die jeweilige Legevorrichtung jeweils einen Zuführgreifer auf, der zwischen dem jeweiligen Greifersystem und dem Halbzeugvorlagesystem angeordnet ist und mit dem jeweiligen Halbzeugvorlagesystem verfahrbar ist. Zwischen dem ersten Halbzeugvorlagesystem 4 und dem ersten Greifersystem 4 ist somit ein erster Zuführgreifer 2.1 und zwischen dem zweiten Halbzeugvorlagesystem 5 und dem zweiten Greifersystem 3 ist somit ein zweiter Zuführgreifer 3.1 positioniert.

Das erste Greifersystem 2 weist weiterhin einen Klemmgeifer 2.2 für die Formateinstellung und einen dritten Greifer in Form eines Klemmgreifers 2.3 auf, der geeignet ist, das Faserband F.1 auf eine bestimmte Länge auszuziehen und/oder zu transportieren.

Analog ist das zweite Greifersystem 3 mit einem Klemmgeifer 3.2 für die Formateinstellung und einem Klemmgreifer 3.3 ausgestattet, der ebenfalls geeignet ist, das Faserband F.2 auf eine bestimmte Länge auszuziehen und/oder zu transportieren.

Zwischen dem ersten Greifersystem 2 und dem zweiten Greifersystem 3 ist ein Pendelgreifer 6 entlang der Legeachse linear bewegbar, dabei sind die Klemmgreifer 2.3 und 3.3 benachbart zum Pendelgreifer 6 angeordnet.

Gemäß einer Variante der Erfindung, können das erste Halbzeugvorlagesystem 4 und/oder das zweite Halbzeugvorlagesystem 5 auf Spulen 4.1a, 5.1a bevorratete Faserbänder F.1, F.2 gleicher oder unterschiedlicher Beschaffenheit und Materialien enthalten kann.

Der Tisch 1 und somit die Ablagefläche 1.1 sind drehbar um die Z-Achse angeordnet, um den Faserorientierungswinkel der abzulegenden Faserbänder F1, F2 zu variieren. In Figur 4 wird eine bereits abgelegte Preform-Faserlage FL dargestellt, die aus hier drei Bandabschnitten F.1a gebildet wird.

Das erfindungsgemäße 3-Greifer-Legesystem weist somit erstmalig ein erste Greifersystem 2 und ein gegenüberliegendes zweites Greifersystem 3 sowie einen zwischen diesen hin und her verfahrbaren Pendelgreifer 6 auf. Alle Greifersysteme 2, 3, 6 sind entlang der Legeachse A (in x-Richtung) angeordnet und individuell verfahrbar. Das 3-Greifer-Legesystem dient zum Auszug und der Ablage von Faserbändern F1, F2 beliebiger Länge an einem frei gewählten Ort der Ablagefläche 1.1.

Die Ablagefläche 1.1 oder die Legeachse A ist entlang der Y-Richtung linear verschiebbar, um einen Versatz der abzulegenden Faserbänder F1, F2 entlang der Y-Achse (quer zur Legerichtung entlang der X-Achse) zu ermöglichen.

Die hier beispielsweise revolverförmig angeordneten Halbzeugvorlagesysteme 4 und 5. beherbergen die Faserbänder F1 bzw. F2, vorzugsweise auf Spulkörpern 4a, 5a. Durch Rotieren der Halbzeugvorlagesysteme 4, 5 um die X-Achse erfolgt der automatisierte Halbzeugwechsel.

Zur Zuführung und Entnahme von Faserbändern F1, F2 in die Greifersysteme 2, 3 können die Halbzeugvorlagesysteme entlang der Legeachse X zum (Lege-)Greifersystem hin bzw. davon wegbewegt werden. Zur Zuführung des Faserbands F1, F2 in die Greifersysteme 2 bzw. 3 dienen die Zuführgreifer 2.1, 3.1 die dem jeweiligen Halbzeugspeicher zugeordnet sind.

In der Figur 5 ist die Prinzipdarstellung in der Seitenansicht gemäß Figur 4 dargestellt. Das 3-Greifer-Legesystem, bestehend aus einer ersten und zweiten Greifersystem 2, 3 und dem Pendelgreifer 6. Alle Greifersysteme 2, 3 und der Pendelgreifer 6 sind entlang einer Linearachse entlang der X-Achse (Legeachse A) angeordnet und individuell verfahrbar. Das 3-Greifer-Legesystem dient zum Auszug und der Ablage der Faserbänder F.1 und F.2 beliebiger Länge an einem frei gewählten Ort des Ablegegrunds bzw. der Ablagefläche 1.1 auf dem Tisch 1

Die Greifersysteme 2 und 3 bestehen jeweils aus einem Greiferpaar aus Greifern 2.2, 2.3 sowie 3.2, 3.3, die individuell entlang der Linearachse - X- Achse - verfahrbar sind. Zwischen den Greifern 2.2, 2.3 erfolgt der Schnitt des Faserbands F1, nachdem es mit dem Pendelgreifer 6 auf die gewünschte Länge ausgezogen wurde. Gleichfalls erfolgt wischen den Greifern 3.2, 3.3 der Schnitt des Faserbands F2, nachdem es von dem Pendelgreifer 6 auf die gewünschte Länge ausgezogen wurde.

Die entstehenden Faserband-Enden des ersten Abschnittes des Faserbandes F1 werden von dem Greifer 2.3 und dem Pendelgreifer gegriffen und an die Ablageposition verfahren und an dieser abgelegt. Analog werden die Faserband-Enden des zweiten Abschnitts des zweiten Faserbandes F2 von dem Greifer 3.3 und dem Pendelgreifer 6 gegriffen, an die Ablegeposition gefahren und abgelegt.

Gemäß einer nicht dargestellten Variante können Greifer 2,3 bzw. 3.3 das gemeinsam mit dem Pendelgreifer an die Ablageposition gefahren Abschnitt auch zum Ablegen an ein Ablegesystem übergeben oder ein Ablegesystem kann in die Greifer 2.3, 3.3 und 6 integriert sein.

Die Halbzeugspeicher 4.1 und 5.1 sind in den Halbzeugvorlagesystemen 4 bzw. 5 angeordnet. Zur Zuführung und Entnahme der Faserbänder F.1 bzw. F.1 in das Greifersystem können die Halbzeugvorlagesysteme 4 bzw. 5 entlang der Legeachse X zum (Lege-)Greifersystem hin bzw. davon wegbewegt werden. Zur Zuführung des Faserbands F.1 bzw. F.2 in das (Lege-)Greifersystem besitzt jeder Halbzeugspeicher 4.1, 5.1 je einen eigenen Zuführgreifer 2.1, 3.1. Die Halbzeugspeicher 4.1, 5.1 besitzen weiterhin vorteilhafter Weise eine nicht dargestellte Zugkraftregulierung, um die auf das Faserband F.1, F.2 wirkende Abzugkraft einstellen zu können. Die Zugkraftregulierung erlaubt dem Halbzeugspeicher 4.1, 4.2 zudem ein Wiederaufrollen von rückgefördertem Faserband F.1, F.2.

Die Greifersysteme 2 bzw. 3 transportieren im Zusammenwirken mit dem zwischen diesen hin-und-herfahrenden Pendelgreifer 6 die Faserbänder F.1 bzw. F.2 an die gewünschte äußere Ablegeposition (Auszugposition). Hier wird das Faserbandende an Pendelgreifer 6 übergeben, der das Faserband ausgehend von Greifersystem 2 oder 3 auf die gewünschte Länge auszieht.

Dies erfolgt wie nachstehend beschrieben:
Das abgelängte Faserband wird innerhalb der Greifersysteme 2 und 3 zwischen den Greifern 2.2 und 2.3 bzw. 3.2 und 3.3 geschnitten. Das offene Faserbandende wird von Greifer 2.3 bzw. 3.3 geklemmt. Das ausgezogene Faserband F.1 bzw. F.2 wird von der Greiferkombination 2.3 - 6 bzw. 3.3 - 6 mittels konventioneller textiltechnischer Niederhaltertechnik auf dem Ablegegrund/der Ablagefläche 1.1 abgelegt.

Der Pendelgreifer 6 zieht wechselweise ein Faserband aus den Greifersystemen 2 und 3 aus. Dadurch entfällt der Leerhub zur Aufnahme eines neuen Faserbands. Während die Greiferkombination 2.3 - 6 einen Faserbandabschnitt F.1a ablegt, positioniert sich Greifersystem 3 für die Ablage des nächsten Faserbandes bzw. Faserbandabschnitts F.2a (und umgekehrt bei Faserbandablage durch Greiferkombination 3.3 - 6).

Die Figuren 6-18 zeigen den detaillierten Verfahrensablauf beim abwechselnden Ausziehen und Ablegen zweier Faserbänder F1, F2.

Vorzugsweise bewegen sich die drei Greifersysteme 2, 3, 6 entlang einer gemeinsamen Linearachse X. (zwei Greifer 2.2, 2.3 des Greifersystems 2 und zwei Greifer 3.2, 3.3 des Greifersystems 3) für Klemmung und Formateinstellung und Greifer 6 (Pendelgreifer) für den Abzug und die Ablage gemeinsam mit Greifer 2.3 oder mit Greifer 3.3.

Es ist Anspruch der Erfindung, dass zwei Greifersysteme 2 und 3 von der jeweils gegenüberliegenden Seite des Vorformlings je ein Faserbandsystem F.1 und F.2 zuführen. Ein dritter Greifer 6 (Pendelgreifer) zieht die Faserbänder F.1 bzw. F.2 wechselweise von Greifer 2.3 und 3.3 aus. Durch die axiale Pendelbewegung des Pendelgreifers 6 zwischen den Greifersystemen 2 und 3 entfällt der Leerhub vor dem Auszug des jeweils nächsten Faserbands.

Das Faserband kann gemäß einer nicht dargestellten Ausführungsvatiante auch (zusätzlich) vom Pendelgreifer 6 zugeführt werden.

In Figur 6 ist die Ausgangsposition dargestellt.

Das erste Halbzeugvorlagesystem 4 mit abgebildetem ersten Halbzeugspeicher 4.1 ist aus einem Legesystem ausgefahren. Das erste Faserbandsystem F.1 ist am ersten Zuführgreifer 2.1 des ersten Halbzeugspeichers 4.1 geklemmt.

Das erste Greifersystem 2 befindet sich in Aufnahmeposition zur Aufnahme des ersten Faserbands F.1. Beide Greifer 2.2, 2.3 und der Zuführgreifer 2.1 sind geöffnet.

Der Pendelgreifer 6 ist geöffnet und beliebig entlang der Linearachse X positioniert, vorzugsweise in Übernahmeposition für das nächste zu legenden Faserband, hier erstes Faserband F1.

In Figur 7 ist a) die Seitenansicht und b) Draufsicht eines ersten Halbzeugspeichers 4.1 beim Zuführen eines ersten Faserbandes F.1 dargestellt.

Der erste Halbzeugspeicher 4.1 fährt entlang der Linearachse X zum ersten Greifersystem 2, um das erste Faserband F.1 in das erste Greifersystem 2, bestehend aus Greifer 2,2 und 2.3, zuzuführen. Der Greifer 2,1 ist geschlossen und die Greifer 2.2, 2.3 und der Pendelgreifer 6 geöffnet.

Figur 8 zeigt a) die Seitenansicht und b) die Draufsicht des ersten Halbzeugspeichers 4.1 beim Übernehmen des ersten Faserbandes F.1 durch das hier erste Greifersystem 2 mittels des nun geschlossenen Greifers 2.2. Nachdem der Greifer 2.2 das erste Faserband F.1 übernommen hat, öffnet der erste Zuführgreifer 2.1. Die Greifer 2.3 und 6 sind ebenfalls noch geöffnet.

Das erste Greifersystem 2 transportiert das an Greifer 2.2 geklemmte Faserband F.1 an die gewünschte Auszugposition, hin zu Pendelgreifer 6. Wobei das erste Faserband F.1 in den Pendelgreifer 6 eingeführt wird (Figur 9).

Nun klemmt der Pendelgreifer 6 gemäß Figur 10 das erste Faserband F1 endseitig und die anderen drei Greifer 2.1, 2.2, 2.3 sind geöffnet.

In Figur 11 zeigen die Darstellungen a) und b) den Auszug und das Ablängen des ersten Faserbands F.1 auf gewünschte Faserbandlänge.

Der geschlossene Pendelgreifer 6 zieht das erste Faserband F.1 an dessen Ende auf die gewünschte Faserbandlänge aus.

Innerhalb des Greifersystems 2 fährt das Greiferpaar 2.2 und 2.3 außeinander, um Raum für den Schnitt des abgelängten ersten Faserbandes zu schaffen.

Währenddessen transportiert des zweite Greifersystem 3 das zweite Faserband F.2 in die Übergabeposition für die spätere Übernahme durch den Pendelgreifer 6.

Gemäß Figur 12 erfolgt nun zwischen den Greifern 2.2 und 2.3 entlang der gestrichelten Linie mittels einer geeigneten Schneideinrichtung das Trennen des ersten Faserbandes F.1 auf die gewünschte Länge, so dass ein erster Faserbandabschnitt F1.a entsteht.

Dabei bleiben der Greifer 2.3 und der Pendelgreifer 6 geschlossen und klemmen den ersten Faserbandabschnitt F.1a.

Das zweite Greifersystem 3 transportiert zwischenzeitlich in Pfeilrichtung das zweite Faserband F.2 in die Übergabeposition für die Ablage des nächsten zweiten Faserbands F.2. Dabei ist der Greifer 3.3 geschlossen und der Greifer 3.2 geöffnet.

Gemäß Figur 13 (a Seitenansicht, b Draufsicht) erfolgt nun das Anfahren der Ablegeposition ersten Faserbandabschnittes F.1a.

Die Greiferkombination aus Greifer 2.3 und Pendelgreifer 6 Greifen die beiden Enden des ersten Faserbandabschnittes F.1a und transportieren diesen in die gewünschte Ablegeposition. Die Bewegung vom Schneidort (Figur 12) ist vorzugsweise mininal zu wählen.

Währenddessen transportiert das zweite Greifersystem 3 das zweite Faserband F.2 in die Übergabeposition für die Ablage des zweiten Faserbands F.2.

Figur 14 zeigt die Ablage des ersten Faserbandabschnitts F.1a auf die Ablagefläche 1.1. Dazu öffnet sich die Greiferkombination 2.3 - 6 und legt das erste Faserband F.1 mit Hilfe eines konventionellen textilen Niederhaltersystems bzw. eines geeigneten Ablagesystems (nicht dargestellt) an der gewünschten Ablegeposition auf der Ablagefläche 1.1 ab. Die nicht bezeichnete Greifer-Linearachse senkt sich zur Unterstützung des Ablegeprozesses unter Umständen entlang der Z-Achse ab.

Das Greifersystem 3 befindet sich zwischenzeitlich in der Übergabeposition für die Abgabe des zweiten Faserbands F.2 an den Pendelgreifer 6.

Gemäß Figur 15 wurde nun der Tisch 1 mit seiner Ablagefläche 1.1 um vorzugsweise eine Bandbreite entlang der Y-Achse, zur Ablegeposition des nächsten hier zweiten abzulegenden Faserbands F.2 verfahren.

Der Pendelgreifer 6 fährt in Übernahmeposition zur Aufnahme des Endes des zweiten Faserbands F.2, der Pendelgreifer 6 schließt sich und übernimmt das Ende des zweiten Faserbandes F.2 aus dem zweiten Greifersystem 3, wonach sich das Greifersystem 3 (dessen Greifer 3.2, 3.3) öffnet

Nun erfolgt gemäß Figur 15 der Auszug des zweiten Faserbandes F.2 in Pfeilrichtung.

Nach erreichen der erforderlichen Lände erfolgt zwischen den Greifern 3.2 und 3.3 der Schnitt des abgelängten Faserbands wodurch auch hier ein zweiter Faserbandabschnitt F.2a (siehe Figur 16) gebildet wird, der zum ersten bereits abgelegten Faserbandabschnitt F.1a versetzt ist. Innerhalb des Greifersystems 3 fährt dazu das Greiferpaar 3.2 und 3.3 außeinander, um Raum für den Schnitt des abgelängten zweiten Faserbands 3.2 zu schaffen. Die Greifer 3.2 und 3.3 schließen sich dabei und klemmen das zweite Faserband F.2.

Der durch den Schnitt entstandene zweite Faserbandabschnitt F.2a, der von dem Pendelgreifer 6 und dem Greifer 3.3 an den Enden gegriffen wird, wird mit den Greifern 6 und 3.3 zur Ablageposition (Figur 16) überführt und gemäß Figur 17 mit Hilfe eines nicht dargestellten konventionellen textilen Niederhaltersystems oder mittels eines geeigneten Ablagesystems abgelegt.

Das erste Greifersystem 2 transportiert währenddessen das erste Faserband F.1 in in die Übergabeposition für das Greifen mit dem Pendelgreifer 6, der nach Ablage des zweiten Faserbandabschnitts F2.a das Ende des ersten Faserbandes F.1 greifen, ausziehen und Ablegen kann (gemeinsam mit Greifer 3.3).

Gemäß Figur 18 wird dazu der Ablegegrund bzw. die Ablagefläche 1.1 nun wiederum um vorzugsweise eine Bandbreite entlang der Y-Achse, zur Ablegeposition des nächsten abzulegenden ersten Faserbands F.1 verfahren.

Der Pendelgreifer 6 fährt in Übernahmeposition zur Aufnahme des ersten Faserbands F.1.

Der Legeprozess folgt ab diesem Schritt beliebig oft wieder der vorgenannt beschriebenen Abfolge.

Nach dem Ablegen eines Bandabschnittes und vor dem Ablegen des nächsten Bandabschnittes kann sich der Tisch mit der Ablagefläche 1.1 relativ zu den Greifersystemen drehen, so dass ein Winkelversatz zwischen den abgelegten Bandabschnitten entsteht.

Zur Entnahme des ersten Faserbands F.1 (Figur 19) fährt das erste Greifersystem 2 zurück in die Übergabeposition an den Halbzeugspeicher 4.1.

Der erste Zuführgreifer 2.1 greift das zurückgeförderte erste Faserband F.1 und die Greifer 2.2 und 2.3 des Greifersystems 2 öffnen sich.

Die Greifersystemkombination aus zweitem Greifersystem 3 mit den Greifern 3.2, 3.3 und aus Pendelgreifer 6 fährt währenddessen die Position zur nächsten Bandablage an. Während des Wechsels zum Halbzeugspeicher 4.1 kann dann mit der Greiferkombination 3.3 - 6 die nächste Bandablage erfolgen.

Alternativ erfolgt zeitgleich am Greifersystem 3 ebenfalls die Entnahme des zweiten Faserbands F.2, analog zur vorgenannt beschriebenen Entnahme des ersten Faserbandes F.1 (nicht dargestellt).

Figur 20 zeigt, dass das erste Halbzeugvorlagesystem 4 mit dem Halbzeugspeicher 4.1 in Pfeilrichtung aus dem Legesystem ausfährt. Das erste Faserband F.1 ist dabei am Zuführgreifer 2.1 des Halbzeugspeichers 4.1 geklemmt.

Die jeweils aktiv am Legeprozess teilhabende Greiferkombination (2+6 oder 3+6) transportiert das ausgezogene Faserband über die definierte Ablegestelle im Vorformling und legt das Faserband vorzugsweise mittels eines Niederhaltersystems dort ab. Die Linearachse mit dem 3-Greifersystem aus erstem Greifersystem 2, zweiten Greifersystem 3 und Pendelgreifer 6 ist insbesondere höhenverschiebbar in Z-Richtung und kann um die Z-Achse drehbar angeordnet sein. Alternativ kann auch der Tisch 1 mit dem Ablegegrund / der Ablagefläche 1.1 eine oder mehrere der Bewegungen relativ zur Linearachsenbewegungsrichtung übernehmen und um eine vertikale Achse drehbar sein.

Vorzugsweise der Pendelgreifer 6 kann eine zusätzliche Fixier- und Andrück-/Komprimiereinheit besitzen, um das erste/zweite Faserband F.1, F.2 bzw. die ersten/zweiten Faserbandabschnitte (F.1a, F.2b) am Ablegegrund/der Ablagefläche 1.1 (voll)flächig zu fixieren und anzudrücken.

Das Schneiden des ersten/zweiten Faserbands F.1 / F.2 erfolgt jeweils an sich gegenüberliegenden Greifersystemen 2 und 3, dort zwischen Greifer 2.2 und 2.3 des ersten Greifersystems bzw. zwischen den beiden Greifern 3.2 und 3.3 des zweiten Greifersystems. Dazu wird eine geeignete Schneideinrichtung vorgesehen, die ggf. auch in den Greifer 2.2 oder 2.3 bzw. 3.2 oder 3.3 integriert sein kann.

Vorzugsweise wird das von der Spule kommende, geschnittene Ende des Faserbands hinter Greifer 2.3 bzw. 3.3 durch die beiden Greifer 2.2 und 3.2 fixiert.

Die Freigabe des abgeschnittenen Faserbandes F.1 bzw. F.2 kann durch Öffnen der Greifer oder durch Abschneiden der geklemmten Faserbandenden erfolgen. In letzterem Fall kann der Schnitt in einem beliebigen Winkel zur Faserbandorientierung erfolgen. Sowohl die Länge als auch die örtliche Lage und die Anzahl der abzulegenden Faserbandabschnitte ist individuell frei wählbar. Die Positionierung der Faserbänder F.1, F.2 kann durch Positionierung des Ablegegrunds/der Ablagefläche 1.1 oder des Greifersystems erfolgen. Der Versatz bzw. Abstand zwischen zwei Faserbändern F.1, F.2 wird vorzugsweise durch Versatz des Ablegegrunds unter bzw. senkrecht zur Legeachse A des Greifersystems realisiert. Alternativ kann der Versatz der Faserbänder F.1, F.2 durch Versetzen der Legeachse quer zur Legerichtung erfolgen. (frei positionierbar)

Bewegt sich das Greifersystem A oder B zur Faserbandvorlage in Richtung der Halbzeugspeicher, wird das überschüssige Faserband in den Halbzeugspeicher oder/und in ein Zwischenspeichersystem (bspw. Tänzerwalze oder Anordnung loser Rollen) zurückgefördert.

Das Einstellen des Orientierungswinkels der Faserbänder bzw. -lagen erfolgt vorzugsweise durch Rotation des Ablegegrunds unter dem Greifersystem. Nach Ablage einer Faserlage kann die Ablage weiterer Faserlagen auf bzw. neben die vorherige Faserlage erfolgen (siehe Figur 4). (Es kann jedoch auch eine Drehbewegung des Greifsystems relativ zur Unterlage erfolgen)

Die (lokale) Fixierung der gelegten Faserbänder im Vorformling erfolgt vorzugsweise durch ein Klebstoff- bzw. Bindersystem. Das Bindersystem wird vor dem Legeprozess auf die Faserbänder aufgebracht. Während oder im Anschluss an den Ablegeprozesses (lokal) erfolgt ggf. eine thermische Aktivierung. Alternativ kann der Binderauftrag während des Ablegeprozesses bspw. mittels Sprühauftrag (z. B. flüssig, Schmelze) direkt an der zu fixierenden Stelle aufgetragen werden. Die Aktivierung des Binders besteht dadurch entweder noch durch den Schmelz-Sprühauftrag oder erfolgt wiederum durch nachträglichen Eintrag thermischer Energie.

Eine weitere mögliche Ausführungsvariante ist in Figur 21 dargestellt.

Das Greifersystem besteht hier aus den Baugruppen:
Formatverstellung F, Greifersystem 2, 3 und Pendelgreifer 6.

Die Formateistellung F wird gebildet aus den Elementen Motor M1, Kupplung 1.7, der Spindel 1.2 mit Rechs-Linksgewinde, den Gewindemuttern 1.3 und 1.4, den Lagern 1.5 und 1.6 sowie der Führung 1.8. An den Gewindemuttern 1.3/1.4 sind die Greifersysteme 2,3 befestigt. Durch Verdrehung der Spindel 1.2 werden die Greifersysteme 2,3 synchron zueinander positioniert. Der Abstand der Greifersysteme 2, 3 stellt das Maß der zu verarbeitenden Bandlänge dar. Der Greifer 6.2 des Pendelgreifers 6 wird über den kolbenstangenlosen pneumatischen Arbeitszylinder 6.1 zwischen den Festanschlägen, die durch die Greifersystemen 2, 3 gebildet werden, bewegt. Dadurch ist gesichert, dass immer genau die Bandlänge abgezogen wird, die durch die Formateinstellung festgelegt wurde. Die Greifersysteme 2, 3 werden gebildet durch die Klemmgreifer Z2.1/Z3.1, Schere S2.2/S3.2, Bandzuführung I2.3/I3.3 - z.B. Injektoren -, zweite Klemmzylinder 2.4/3.4 die dritten Klemmzylinder 2.6/3.6 und die Fadenreserve 2.5/3.5. Zum Beginn des Prozesses werden alle Bänder/Rovings 2.8, 3.8 manuell von den Spulen 2.7/3.7 bis in die Bandzuführung 2.3/3.3 z.B. Injektoren eingelegt. Danach erfolgt das Bilden einer Bandreserve, in dem zweiten Klemmzylinder 2.4/3.4 das Band 2.8, 3.8 klemmt und der Zylinder 2.5/3.5 ausfährt und dadurch wird Band 2.8/3.8 von der Spule 2.7/3.7 abgezogen. Anschließend klemmt Zylinder 2.6/3.6 und Zylinder 2.5/3.5 sowie Zylinder 2.4/3.4 fahren ein. Anschließend erfolgt das Zuschalten der Bandzuführung 2.3/3.3 (Injektoren) und das Band 2.8, 3.8 wird bis in die Klemmgreifer Z2.1/Z3.1 gefördert. Anschließend wird die Bandzuführung 2.3, 3.3 -Injektoren- abgeschaltet und dasGreifersystem 3 öffnet. In dieser Position übernimmt der Greifer 6.2 des Pendelgreifers 6 das Band und zieht es bis zu seinem Festanschlag an der gegenüberliegenden Seite ab. Ist diese Position erreicht, klemmt der erste Klemmgreifer Z2.1/Z3.1, die Scheideinrichtung S2.2/S3.2 (z.B. Schere) schneidet und der Bandabschnitt kann abgelegt werden. Jedes Greifersystem 2/3 ist so konzipiert, dass mehrere Bänder nacheinander verarbeitet werden können. Dazu ist es notwendig, dass jedem Band ein separater Klemmzylinder 2.4 und 3.4 sowie 2.6 und 3.6 zugeordnet ist, da diese für die Bandauswahl zuständig sind. Die anderen Elemente wie Klemmgreifer Z2.1, Z3.1, Schneideinrichtung S2.2/S3.2, Bandzuführung I2.3/I3.3, und Fadenreserve 2.5, 3.5 brauchen nur einmal pro Greifersystem 2, 3 vorhanden sein. Dieser Vorgang wiederholt sich wechselseitig und erfolgt in der Zeit in dem das Handling (Roboter, xy Portal) die Ablageposition anfährt. Das gesamte Greifsystem kann so am Handling angeordnet sein, dass es um eine Drehachse schwenkbar ist.

Zusammenfassend kann festgestellt werden, dass die Baugruppen folgende Teilfunktionen übernehmen:
- Formateinstellung:: Festlegung der Bandlänge.
- Greifersystem:: Bereitstellung des Bandendes für die Übernahme durch den Pendelgreifer und Scheiden des Bandes nach dem Abzug.
- Pendelgreifer:: Abzug des Bandes.

Gemäß einer nicht dargestellten Ausführung der vorgenannten Ausführungsbeispiele können auch mehrmals hintereinander von dem gleichen Faserband Faserbandabschnitte abgelegt werden.

Zum Beispiel kann dann eine Faserlage FL (Siehe Figur 4) aus den gleichen Faserbandabschnitten F.1a oder F.2a gebildet werden.

Die Faserbänder können beispielsweise vorimprägniert sein.

Es ist weiterhin möglich, zwischen Faserlagen FL Sensoren, Hartpunkte, Anbindungspunkte (z.B. aus Blech) einzulegen.

Die mit dem erfindungsgemäßen Verfahren und der Vorrichtung hergestellten Halbzeuge können beispielsweise als Textilverstärkung von Faser-Kunststoff-Verbunden, für Windkraftanlagen (z.B. Flügel) im Fahrzeugbau (Flugzeuge, Boote, Landfahrzeuge), Sportgeräte, Fassadenelemente und dergleichen eingesetzt werden.

### Bezugszeichenliste

### Stand der Technik Figuren 1 bis 3:

- 1': Ablagetisch (Rundtisch)
- 1.1': Ablagefläche
- 2`: Faserband
- 3`: Polygon
- 4', 5`: Greiferpaar
- 2a`, 2b`, 2c`, 2d`: Faserlagen
- A1: zusätzlicher Greifer
- x`: x-Achse
- z`: vertikale Achse

### Erfindungsgemäße Lösung Figuren 4 bis 20:

- 1: Ablagetisch
- 1.1: Ablagefläche
- 2: erste Greifersystem
- 2.1: erster Zuführgreifer
- 2.2: erster Klemmgreifer für die Formateinstellung
- 2.3: erster Klemmgreifer zum Ausziehen des ersten Faserbandes F.1
- 3: zweite Greifersystem
- 3.1: zweiter Zuführgreifer
- 3.2: zweiter Klemmgreifer für die Formateinstellung
- 3.3: zweiter Klemmgreifer zum Ausziehen des zweiten Faserbandes F.2

- 4: erstes Halbzeugvorlagesystem
- 4.1: erster Halbzeugspeicher
- 4a: Spulenkörper

- 5: zweites Halbzeugvorlagesystem
- 5.1: zweiter Halbzeugspeicher
- 5a: Spulenkörper

- 6: Pendelgreifer
- A: Längsachse

- F.1, F.2: erste bzw. zweite Faserband
- FL: Preform-Faserlage

- X: Legeachse

### Erfindungsgemäße Lösung nach Figur 21:

- M1: Motor Formatverstellung
- F: Formatverstellung
- 1.2: Spindel
- 1.3, 1.4: Spindelmutter
- 1.5, 1.6: Lager
- 1.7: Kupplung
- 1.8: Führung
- 2: erstes Greifersystem
- Z2.1: erster Klemmgreifer zum Ausziehen des ersten Faserbandes F.1
- S2.2: Schneideinheit
- I2.3: Injektor
- 2.4: erster Klemmgreifer für die Formateinstellung
- 2.5: Tänzer, Fadenreserve
- 2.6: dritter Klemmgreifer
- 2.7: Spule
- F.1: Roving 1

- 3: zweites Greifersystem
- 3.1: erster Klemmgreifer zum Ausziehen des ersten Faserbandes F.1
- S3.2: Schneideinheit
- I3.3: Injektor
- 3.4: erster Klemmgreifer für die Formateinstellung
- 3.5: Tänzer, Fadenreserve
- 3.6: dritter Klemmgreifer
- 3.7: Spule
- F.2: Roving 2

- 6: Abzugsgreifereinheit (Pendelgreifer)
- 6.1: kolbenstangenloser pneumatischer Arbeitszylinder
- 6.2: Klemmgreifer

## Patentansprüche

1. Legevorrichtung für bandförmiges Material (nachfolgend Band genannt) mit einem ersten Greifersystem (2) zum Ausziehen eines ersten Bandes aus einem ersten Speicher (4.1) sowie mit einer ersten Trenneinrichtung und einer Ablagefläche (1.1) eines Tisches (1) zum Ablegen eines abgetrennten Bandabschnittes des ersten Bandes (F1), wobei das erste Greifersystem (2) und die Ablagefläche (1.1) relativ zueinander in mehreren Achsen bewegbar sind und wobei das erste Greifersystem (2) wenigstens einen ersten axial bewegbaren Greifer zum Greifen des Bandes (F1) aufweist, der entlang einer Längsachse (X) zum Ausziehen und Positionieren des Bandes (F1) bewegbar ist, wobei die Legevorrichtung mindestens ein zweites Greifersystem (3) mit wenigstens einem zweiten Greifer zum Ausziehen eines zweiten Bandes (F2) aus einem zweiten Speicher (4.2) aufweist, wobei der erste und der zweite Greifer aufeinanderzu und voneinanderweg bewegbar sind **dadurch gekennzeichnet, dass** zwischen dem ersten und dem zweiten Greifersystem (2, 3) ein Pendelgreifer (6) angeordnet ist, der zwischen dem ersten und dem zweiten Greifersystem (2, 3) hin und her bewegbar und dazu ausgeführt ist, das erste Band (F1) und das zweite Band (F2) abwechselnd auf eine erforderliche Länge auszuziehen und auf der Ablagefläche (1.1) abzulegen.

2. Legevorrichtung nach Anspruch 1, **dadurch gekennzeichnet, dass** das zweite Greifersystem (3) in Richtung des ersten Greifersystems (2) bewegbar ist, wenn ein Bandabschnitt des ersten Bandes (F1) in einer Position zum Ablegen auf dem Tisch (1) angeordnet ist und dass das erste Greifersystem (2) in Richtung zum zweiten Greifersystem (3) bewegbar ist, wenn ein Bandabschnitt des zweiten Bandes (F2) in einer Position zum Ablegen auf dem Tisch (1) angeordnet ist.

3. Legevorrichtung nach einem der vorgenannten Ansprüche, **dadurch gekennzeichnet, dass** das erste Greifersystem (2) und das zweite Greifersystem (3) auf einer gemeinsamen horizontalen Längsachse (A) relativ zueinander bewegbar sind.

4. Legevorrichtung nach einem der vorgenannten Ansprüche, **dadurch gekennzeichnet, dass** zwischen dem ersten und dem zweiten Greifersystem ein Pendelgreifer angeordnet ist und das Band über den Pendelgreifer zugeführt wird.

5. Legevorrichtung nach einem der vorgenannten Ansprüche, **dadurch gekennzeichnet, dass** die Ablagefläche (1.1) auf dem Tisch (1) ausgebildet ist, der um eine vertikale Drehachse (Z) drehbar und in horizontal in zwei Achsen (X und Y) verfahrbar ist.

6. Legevorrichtung nach einem der vorgenannten Ansprüche, **dadurch gekennzeichnet, dass** das Greifersystem (2, 3) um die Z-Achse drehbar ist.

7. Legevorrichtung nach einem der vorgenannten Ansprüche, **dadurch gekennzeichnet, dass** das Greifersystem (2, 3) oder/und der Tisch (1) vertikal entlang der Z-Achse verfahrbar ist.

8. Legevorrichtung nach einem der vorgenannten Ansprüche, **dadurch gekennzeichnet, dass** das erste Greifersystem (2) und das weitere Greifersystem (3) mit einer entlang der Längsachse (A) verlaufenden Führungsbahn in Eingriff stehen und entlang der Führungsbahn axial verfahrbar sind.

9. Legevorrichtung nach einem der vorgenannten Ansprüche, **dadurch gekennzeichnet, dass** der Speicher (4.1, 5.1) des Bandes (F1, F2) als Spule ausgebildet ist und dass
wenigstens einem Greifersystem (2, 3) ein Vorlagesystem zur Aufnahme mehrerer Spulen (4a, 5a) zugeordnet ist.

10. Legevorrichtung nach einem der vorgenannten Ansprüche, **dadurch gekennzeichnet, dass** zur Zuführung der Bänder (F1, F2) zu den Klemmgreifern eine Bandzuführung integriert ist, wobei die Zuführung vorzugsweise pneumatisch, bspw. über vorzugsweise Injektoren, oder mechanisch, bspw. über Greifer, erfolgt.

11. Legevorrichtung nach einem der vorgenannten Ansprüche, **dadurch gekennzeichnet, dass** jedem ersten und zweitem Greifersystem (2, 3) eine Trenneinrichtung zugeordnet ist, die in einer Auszugsrichtung des Bandes (F1, F2) hinter einem ersten oder zweiten Greifer des Greifersystems (2, 3) angeordnet oder in den ersten oder zweiten Greifer integriert ist.

12. Legevorrichtung nach einem der vorgenannten Ansprüche, **dadurch gekennzeichnet, dass** dem ersten und/oder zweiten Greifersystem ein oder mehrere Zusatzgreifer zugeordnet oder in diese integriert sind.

13. Legeverfahren für bandförmiges Material, nachfolgend Band genannt, mit einem ersten Greifersystem (2) und wenigstens einem ersten Greifer zum Abziehen eines ersten Bandes (F1) aus einem ersten Speicher (4.1) auf eine vorbestimmte Länge, Abtrennen eines Bandabschnittes mit einer Abschnittslänge von dem ersten Band (F1), Ablegen des Bandabschnittes auf einer Ablagefläche (1.1) eines Ablagetisches (1) und Rückhub des ersten Greifers auf eine Ausgangsposition, wobei während des Zuführens und/oder Ablegens des ersten Bandabschnittes auf die Ablagefläche (1.1) oder während des Rückhubes des ersten Greifers mittels wenigstens eines weiteren zweiten Greifersystems (3) aus einem weiteren Speicher (5.1) ein weiteres Band auf eine vorbestimmte Länge abgezogen wird, wobei sich der zweite Greifer in Richtung des ersten Greifers bewegt, Abtrennen eines zweiten Bandabschnittes von dem zweiten Band, Ablegen des zweiten Bandabschnittes auf der Ablagefläche und/oder dem ersten Bandabschnitt und Rückhub des zweiten Greifers auf eine Ausgangsposition, **dadurch gekennzeichnet, dass** zwischen dem ersten und dem zweiten Greifer ein Pendelgreifer (6) hin-und her bewegt wird, der abwechselnd das erste Band (F1) und das weitere Band (F2) greift und den ersten Bandabschnitt mit dem ersten Greifer und den weiteren Bandabschnitt mit dem zweiten Greifer zur Ablageposition bewegt und an dieser abliegt.

14. Legeverfahren nach Anspruch 13, **dadurch gekennzeichnet, dass** der zweite Greifer einen Vorhub vollführen kann, während der erste Bandabschnitt abgelegt wird und/oder oder der erste Greifer einen Rückhub vollführt und dass der erste Greifer einen Vorhub vollführen kann, während der zweite Bandabschnitt abgelegt wird und/oder der zweite Greifer einen Rückhub vollführt.

15. Legeverfahren nach einem der vorgenannten Ansprüche, **dadurch gekennzeichnet, dass** während und/oder zwischen einer Vorhubbewegung oder einer Rückhubbewegung des ersten oder zweiten Greifers eine ein oder mehrachsige Relativbewegung zwischen einem Rundtisch, auf dem die Ablagefläche (1.1) ausgebildet ist und den Greifersystemen (2, 3) erfolgt, wobei ein Tisch (1) während und/oder zwischen einer Vorhubbewegung oder einer Rückhubbewegung des ersten oder zweiten Greifers eine Rotationsbewegung um eine vertikale Achse und/oder eine Linearbewegung in X- und/oder Y-Richtung und/oder eine Linearbewegung in Z-Richtung vollführt.
und/oder wobei das Greifsystem (2, 3) eine Relativbewegung um die Z-Achse und/oder entlang der Z-Achse ausführt.

## Claims

1. Laying device for band-shaped material (hereinafter referred to as band) having a first gripper system (2) for pulling out a first band from a first store (4.1) and having a first separating device and a depositing surface (1.1) of a table (1) for depositing a separated band section of the first band (F1), wherein the first gripper system (2) and the depositing surface (1.1) are movable relative to one another in a plurality of axes and wherein the first gripper system (2) has at least one first axially movable gripper for gripping the band (F1), which is movable along a longitudinal axis (X) for pulling out and positioning the band (F1), wherein the laying device has at least one second gripper system (3) with at least one second gripper for pulling out a second band (F2) from a second store (4.2), wherein the first and the second gripper are movable towards and away from each other, **characterized in that** a pendulum gripper (6) is arranged between the first and the second gripper system (2, 3), which pendulum gripper can be moved back and forth between the first and the second gripper system (2, 3) and is designed to alternately pull out the first band (F1) and the second band (F2) to a required length and to deposit them on the depositing surface (1.1).

2. Laying device according to claim 1, **characterized in that** the second gripper system (3) is movable in the direction of the first gripper system (2) when a band section of the first band (F1) is arranged in a position for depositing on the table (1), and **in that** the first gripper system (2) is movable in the direction of the second gripper system (3) when a band section of the second band (F2) is arranged in a position for depositing on the table (1).

3. Laying device according to one of the preceding claims, **characterized in that** the first gripper system (2) and the second gripper system (3) are movable relative to each other on a common horizontal longitudinal axis (A).

4. Laying device according to one of the preceding claims, **characterized in that** a pendulum gripper is arranged between the first and the second gripper system and the band is fed via the pendulum gripper.

5. Laying device according to one of the preceding claims, **characterized in that** the depositing surface (1.1) is formed on the table (1), which can be rotated about a vertical axis of rotation (Z) and can be moved horizontally in two axes (X and Y).

6. Laying device according to one of the preceding claims, **characterized in that** the gripper system (2, 3) is rotatable about the Z-axis.

7. Laying device according to one of the preceding claims, **characterized in that** the gripper system (2, 3) and/or the table (1) can be moved vertically along the Z-axis.

8. Laying device according to one of the preceding claims, **characterized in that** the first gripper system (2) and the further gripper system (3) are in engagement with a guide track extending along the longitudinal axis (A) and can be moved axially along the guide track.

9. Laying device according to one of the preceding claims, **characterized in that** the store (4.1, 5.1) of the band (F1, F2) is designed as a spool
and **in that** at least one gripper system (2, 3) is assigned a supply system for receiving a plurality of spools (4a, 5a).

10. Laying device according to one of the preceding claims, **characterized in that** a band feed is integrated for feeding the bands (F1, F2) to the clamping grippers, wherein the feed preferably takes place pneumatically, for example preferably via injectors, or mechanically, for example via grippers.

11. Laying device according to one of the preceding claims, **characterized in that** each first and second gripper system (2, 3) is assigned a separating device which is arranged downstream of a first or second gripper of the gripper system (2, 3) in an extraction direction of the band (F1, F2) or is integrated into the first or second gripper.

12. Laying device according to one of the preceding claims, **characterized in that** one or more additional grippers are assigned to the first and/or second gripper system or are integrated therein.

13. Laying method for band-shaped material, hereinafter referred to as band, having a first gripper system (2) and at least one first gripper for drawing off a first band (F1) from a first store (4.1) to a predetermined length, severing a band section with a section length from the first band (F1), depositing the band section on a depositing surface (1.1) of a depositing table (1) and return stroke of the first gripper to a starting position, wherein during the feeding and/or depositing of the first band section onto the depositing surface (1.1) or during the return stroke of the first gripper by means of at least one further second gripper system (3) from a further store (5.1), a further band is drawn off to a predetermined length, wherein the second gripper moves in the direction of the first gripper, severing a second band section from the second band, depositing the second band section on the depositing surface and/or the first band section and return stroke of the second gripper to a starting position,
**characterized in that**
a pendulum gripper (6) is moved back and forth between the first and the second gripper, which alternately grips the first band (F1) and the further band (F2) and moves the first band section with the first gripper and the further band section with the second gripper to the depositing position and deposits it there.

14. Laying method according to claim 13, **characterized in that** the second gripper can perform a forward stroke while the first band section is being deposited and/or or the first gripper performs a return stroke and **in that** the first gripper can perform a forward stroke while the second band section is being deposited and/or the second gripper performs a return stroke.

15. Laying method according to one of the preceding claims, **characterized in that** during and/or between a forward stroke movement or a return stroke movement of the first or second gripper, a single-axis or multi-axis relative movement between a rotary table, on which the depositing surface (1.1) is formed, and the gripper systems (2, 3) takes place, wherein a table (1) performs a rotational movement about a vertical axis and/or a linear movement in the X- direction and/or Y-direction and/or a linear movement in the Z-direction during and/or between a forward stroke movement or a return stroke movement of the first or second gripper, and/or wherein the gripper system (2, 3) performs a relative movement about the Z-axis and/or along the Z-axis.

## Revendications

1. Dispositif de pose pour un matériau en bandes (appelé « bande » ci-après), avec un premier système de préhension (2) pour extraire une première bande d'un premier magasin (4.1) et avec une première installation de coupe et une surface de pose (1.1) d'une table (1) pour poser un tronçon de bande découpé de la première bande (F1), le premier système de préhension (2) et la surface de pose (1.1) pouvant être déplacés l'un par rapport à l'autre sur plusieurs axes et le premier système de préhension (2) présentant un premier grappin mobile dans le sens axial pour saisir la bande (F1), qui peut se déplacer le long d'un axe longitudinal (X) pour extraire et positionner la bande (F1), le dispositif de pose comportant au moins un deuxième système de préhension (3) avec au moins un deuxième grappin pour extraire une deuxième bande (F2) d'un deuxième magasin (4.2), le premier grappin et le deuxième pouvant être rapprochés et éloignés l'un de l'autre, **caractérisé en ce qu'**un grappin pendulaire (6) est disposé entre le premier système de préhension et le deuxième (2, 3), capable de se déplacer en va-et-vient entre le premier système de préhension et le deuxième (2, 3) et conçu pour extraire alternativement la première bande (F1) et la deuxième bande (F2) sur une longueur nécessaire et les déposer sur la surface de pose (1.1).

2. Dispositif de pose selon la revendication 1, **caractérisé en ce que** le deuxième système de préhension (3) peut être déplacé en direction du premier système de préhension (2) quand un tronçon de la première bande (F1) est disposé dans une position de pose sur la table (1) et **en ce que** le premier système de préhension (2) peut être déplacé en direction du deuxième système de préhension (3) quand un tronçon de la deuxième bande (F2) est disposé dans une position de pose sur la table (1).

3. Dispositif de pose selon l'une des revendications précédentes, **caractérisé en ce que** le premier système de préhension (2) et le deuxième système de préhension (3) peuvent être déplacés l'un par rapport à l'autre sur un axe longitudinal commun (A) horizontal.

4. Dispositif de pose selon l'une des revendications précédentes, **caractérisé en ce qu'**un grappin pendulaire est disposé entre le premier système de préhension et le deuxième et la bande est amenée à l'aide du grappin pendulaire.

5. Dispositif de pose selon l'une des revendications précédentes, **caractérisé en ce que** la surface de pose (1.1) est formée sur la table (1), qui peut tourner autour d'un axe de rotation (Z) vertical et se déplacer à l'horizontale sur deux axes (X et Y).

6. Dispositif de pose selon l'une des revendications précédentes, **caractérisé en ce que** le système de préhension (2, 3) peut tourner autour de l'axe Z.

7. Dispositif de pose selon l'une des revendications précédentes, **caractérisé en ce que** le système de préhension (2, 3) et/ou la table (1) peuvent se déplacer verticalement le long de l'axe Z.

8. Dispositif de pose selon l'une des revendications précédentes, **caractérisé en ce que** le premier système de préhension (2) et l'autre système de préhension (3) sont en prise avec une piste de guidage courant le long de l'axe longitudinal (A) et peuvent se déplacer dans le sens axial le long de la piste de guidage.

9. Dispositif de pose selon l'une des revendications précédentes, **caractérisé en ce que** le magasin (4.1, 5.1) de bande (F1, F2) est conformé comme une bobine et **en ce qu'**au moins un système de préhension (2, 3) est associé à un système de réserve pouvant recevoir plusieurs bobines (4a, 5a).

10. Dispositif de pose selon l'une des revendications précédentes, **caractérisé en ce qu'**une arrivée de bande est intégrée dans les grappins de serrage pour amener les bandes (F1, F2), l'arrivée étant de réalisée de préférence de façon pneumatique, par exemple, de préférence, par des injecteurs, ou mécanique, par exemple par des grappins.

11. Dispositif de pose selon l'une des revendications précédentes, **caractérisé en ce que** chaque premier et chaque deuxième système de préhension (2, 3) est associé à une installation de séparation qui est disposée, dans le sens d'extraction de la bande (F1, F2), derrière un premier ou un deuxième grappin du système de préhension (2, 3) ou qui est intégrée dans le premier ou le deuxième grappin.

12. Dispositif de pose selon l'une des revendications précédentes, **caractérisé en ce qu'**un ou plusieurs grappins supplémentaires sont associés au premier système de préhension et/ou au deuxième ou intégrés dans ceux-ci.

13. Procédé de pose pour un matériau en bandes (appelé « bande » ci-après), avec un premier système de préhension (2) et au moins un premier grappin pour extraire une première bande (F1) d'un premier magasin (4.1) sur une longueur prédéterminée, une découpe d'un tronçon de bande ayant une longueur de tronçon dans la première bande (F1), la pose du tronçon de bande sur une surface de pose (1.1) d'une table de pose (1) et le retour du premier grappin dans une position initiale, dans lequel, pendant l'arrivée et/ou la dépose du premier tronçon de bande sur la surface de pose (1.1) ou pendant le retour du premier grappin, une autre bande est extraite d'un autre magasin (5.1) sur une longueur prédéterminée au moyen d'un autre deuxième système de préhension (3), le deuxième grappin se déplaçant dans la direction du premier grappin, un deuxième tronçon de bande est découpé dans la deuxième bande, le deuxième tronçon de bande est déposé sur la surface de pose et/ou le premier tronçon de bande et le deuxième grappin revient à une position initiale, **caractérisé en ce qu'**un grappin pendulaire (6) se déplace en va-et-vient entre le premier grappin et le deuxième, saisit alternativement la première bande (F1) et l'autre bande (F2), déplace le premier tronçon de bande avec le premier grappin et l'autre tronçon de bande avec le deuxième grappin vers la position de pose et les pose sur celle-ci.

14. Procédé de pose selon la revendication 13, **caractérisé en ce que** le deuxième grappin peut effectuer une course d'aller pendant la dépose du premier tronçon de bande et/ou le retour du premier grappin et **en ce que** le premier grappin peut effectuer une course d'aller pendant la dépose du deuxième tronçon de bande et/ou le retour du deuxième grappin.

15. Procédé de pose selon l'une des revendications précédentes, **caractérisé en ce que**, pendant et/ou entre un mouvement d'aller ou un mouvement de retour du premier ou du deuxième grappin, un mouvement relatif sur un ou plusieurs axes est exécuté entre une table ronde sur laquelle est formée la surface de pose (1.1) et les systèmes de préhension (2, 3), une table (1) effectuant, pendant et/ou entre un mouvement d'aller ou un mouvement de retour du premier ou du deuxième grappin, un mouvement de rotation autour d'un axe vertical et/ou un mouvement linéaire dans la direction des X et/ou des Y et/ou un mouvement linéaire dans la direction des Z, et/ou le système de préhension (2, 3) effectuant un mouvement relatif autour de l'axe Z et/ou le long de l'axe Z.
